# EUROPEAN PATENT APPLICATION

(11) **EP 4 654 624 A1**
(43) Date of publication of application: **26.11.2025**
(21) Application number: 24773952.7
(22) Date of filing: 12.03.2024
(51) Int. Cl.: H04W 4/029

(54) **POSITIONING MEASUREMENT METHOD, STOCKTAKING METHOD AND RELATED APPARATUS**

(30) Priority: 17.03.2023 CN 202310301670
(71) Applicant: Huawei Technologies Co., Ltd., Shenzhen, Guangdong 518129 (CN)
(72) Inventor: LIU, Heng, Shenzhen, Guangdong 518129 (CN); HAO, Jinping, Shenzhen, Guangdong 518129 (CN); ZHU, Ningbo, Shenzhen, Guangdong 518129 (CN)
(74) Representative: Körber, Martin Hans
(86) International application number: PCT/CN2024/081077
(87) International publication number: WO 2024/193385

(57) **Abstract**

Embodiments of this application disclose a positioning measurement method, an inventory method, and a related apparatus, so that a first network device performs positioning measurement on a first apparatus during or after an inventory process of the first apparatus, thereby meeting a positioning requirement during or after the inventory process. The method in embodiments of this application includes: A core network device sends an inventory request to the first network device, where the inventory request is used to request inventory of the first apparatus, the inventory request includes first information, and the first information indicates the first network device to perform positioning measurement on the first apparatus. Correspondingly, the first network device receives the inventory request from the core network device; and the first network device performs positioning measurement on the first apparatus during or after the inventory process of the first apparatus.

## Description

This application claims priority to Chinese Patent Application No. 202310301670.6, filed with the China National Intellectual Property Administration on March 17, 2023 and entitled "POSITIONING MEASUREMENT METHOD, INVENTORY METHOD, AND RELATED APPARATUS", which is incorporated herein by reference in its entirety.

### TECHNICAL FIELD

This application relates to the field of communication technologies, and in particular, to a positioning measurement method, an inventory method, and a related apparatus.

### BACKGROUND

A passive internet of things (passive internet of things, PIoT) is a communication system including a new energy-saving tag (tag) terminal and a reader. The reader may remotely read information about the tag terminal. The passive internet of things has low maintenance costs, and includes miniaturized devices. Therefore, the passive internet of things is widely applied to industries such as manufacturing, logistics, electric power, and animal husbandry. For example, the passive internet of things may be applied to a warehousing scenario. The reader needs to measure a position of the tag terminal, to facilitate material query and high-value goods management, and implement inventory position level positioning. Specific positioning precision is required to range from 2 meters to 3 meters.

However, the tag terminal has a weak signal processing capability, and therefore cannot implement a complex signal processing algorithm. Consequently, a positioning capability of the tag terminal is limited, and a conventional positioning method cannot be directly applied to the tag terminal. For example, the tag terminal cannot perform downlink positioning measurement. Therefore, how to perform positioning measurement on the tag terminal to meet a positioning requirement is an urgent problem to be resolved.

### SUMMARY

This application provides a positioning measurement method, an inventory method, and a related apparatus, so that a first network device performs positioning measurement on a first apparatus during or after an inventory process of the first apparatus, thereby meeting a positioning requirement.

A first aspect of this application provides a positioning measurement method. The method includes:

A core network device sends an inventory request to a first network device, where the inventory request is used to request inventory of a first apparatus, the inventory request includes first information, and the first information indicates the first network device to perform positioning measurement on the first apparatus. The first network device receives the inventory request from the core network device; and the first network device performs positioning measurement on the first apparatus during or after the inventory process of the first apparatus.

In the foregoing technical solution, the inventory request includes the first information, and the first information indicates the first network device to perform positioning measurement on the first apparatus during or after the inventory process of the first apparatus, so that the first network device performs positioning measurement on the first apparatus during or after the inventory process of the first apparatus, thereby meeting a positioning requirement. In another aspect, the core network device includes the first information in the inventory request. Therefore, existing signaling is reused, and signaling overheads are reduced.

A second aspect of this application provides a positioning measurement method. The method includes:

A core network device sends an inventory request to a first network device, where the inventory request is used to request inventory of a first apparatus, the inventory request includes first information, and the first information indicates the first network device to perform positioning measurement on the first apparatus during or after an inventory process of the first apparatus. Correspondingly, the first network device receives the inventory request from the core network device, and the first network device sends first configuration information to the first apparatus, where the first configuration information includes configuration information of a positioning reference signal of the first apparatus.

It can be learned from the foregoing technical solution that the inventory request includes the first information, and the first information indicates the first network device to perform positioning measurement on the first apparatus during or after the inventory process of the first apparatus; and the first network device sends the first configuration information to the first apparatus, where the first configuration information includes the configuration information of the positioning reference signal of the first apparatus. This facilitates performing positioning measurement on the first apparatus during or after the inventory process, thereby meeting a positioning requirement during or after the inventory process of the first apparatus. In another aspect, the core network device includes the first information in the inventory request. Therefore, existing signaling is reused, and signaling overheads are reduced.

Based on the first aspect or the second aspect, in a possible implementation, the method further includes: The core network device sends, to the first network device, at least one of the following: second information, third information, recommended configuration information, or fourth information, where the second information indicates a positioning manner of performing positioning measurement on the first apparatus, and the positioning manner includes performing positioning measurement on the first apparatus based on a positioning reference signal sent by the first apparatus, or performing positioning measurement on the first apparatus based on an electronic product code (electronic product code, EPC) sent by the first apparatus; the third information indicates to perform positioning measurement on the first apparatus during the inventory process, or perform positioning measurement on the first apparatus after the inventory process; the recommended configuration information includes positioning reference signal configuration information recommended by the core network device; and the fourth information indicates a measurement quantity type of positioning measurement performed on the first apparatus. In this implementation, content further carried in the inventory request is shown. Therefore, the first network device configures, with reference to content carried in the inventory request, appropriate configuration information for the first apparatus, so that positioning measurement is performed on the first apparatus during or after the inventory process. For example, the first network device selects, based on the second information, an appropriate positioning manner for the first apparatus to perform positioning measurement. The first network device selects, based on the third information, an appropriate positioning order to perform positioning measurement on the first apparatus. The first network device configures, with reference to the recommended configuration information, corresponding configuration information for the first apparatus. The first network device performs positioning measurement based on the fourth information.

Based on the first aspect or the second aspect, in a possible implementation, after the first network device receives the inventory request from the core network device, the method further includes: The first network device sends an inventory command to the first apparatus, where the inventory command is used for inventory of the first apparatus; the first network device receives a first random number from the first apparatus; and the first network device sends first acknowledgment (acknowledgment, ACK) to the first apparatus, where the first ACK indicates that the first network device successfully receives the first random number. In this implementation, a process in which the first network device performs inventory on the first apparatus is shown.

Based on the first aspect or the second aspect, in a possible implementation, the first ACK includes at least one of the following: a quantity of times of sending the positioning reference signal of the first apparatus or frequency domain information of the positioning reference signal, or the first ACK includes at least one of the following: a quantity of times of sending the EPC of the first apparatus or frequency domain information of the EPC. In this implementation, the first network device can send dedicated configuration information to the first apparatus by using the first ACK during the inventory process. This helps improve positioning precision. For example, the first network device configures the frequency domain information of the positioning reference signal or the EPC for the first apparatus by using the first ACK. This helps prevent different apparatuses from using a same frequency domain resource, avoid positioning measurement interference, and improve positioning precision.

Based on the first aspect or the second aspect, in a possible implementation, the first ACK further includes fifth information, and the fourth information indicates the first apparatus to send the positioning reference signal after the EPC is sent; or the first ACK further includes sixth information, and the sixth information indicates that the EPC sent by the first apparatus is used to perform positioning measurement on the first apparatus. In this implementation, the first ACK further carries the fifth information or the sixth information, to indicate a positioning order to the first apparatus. Further, the first network device can excite, by using the fifth information or the sixth information, the first apparatus to send the positioning reference signal or the EPC, so that the first network device performs positioning measurement on the first apparatus.

Based on the first aspect, in a possible implementation, that the first network device performs positioning measurement on the first apparatus during or after the inventory process of the first apparatus includes: The first network device receives the positioning reference signal from the first apparatus; and the first network device measures the positioning reference signal, to obtain a first measurement result. Therefore, the positioning reference signal of the first apparatus is measured during or after the inventory process, and positioning measurement is performed on the first apparatus.

Based on the first aspect, in a possible implementation, the method further includes: The first network device sends the first measurement result to the first core network device; and the core network device receives the first measurement result from the first network device, and performs positioning on the first apparatus based on the first measurement result.

Based on the first aspect, in a possible implementation, that the first network device performs positioning measurement on the first apparatus during or after the inventory process of the first apparatus includes: The first network device receives the EPC sent by the first apparatus; and the first network device measures the EPC, to obtain a second measurement result. Therefore, the EPC sent by the first apparatus is measured during or after the inventory process, and positioning measurement is performed on the first apparatus.

Based on the first aspect, in a possible implementation, the method further includes: The first network device sends the second measurement result to the first core network device; and the core network device receives the second measurement result from the first network device, and performs positioning on the first apparatus based on the second measurement result.

Based on the second aspect, in a possible implementation, after the first network device sends the first ACK to the first apparatus, the method further includes: The first network device receives the positioning reference signal from the first apparatus; the first network device measures the positioning reference signal, to obtain a first measurement result; the first network device sends the first measurement result to the core network device; and the core network device receives the first measurement result from the first network device, and performs positioning on the first apparatus based on the first measurement result. Therefore, the positioning reference signal sent by the first apparatus is measured after the inventory process of the first apparatus, and the first apparatus is positioned.

Based on the second aspect, in a possible implementation, after the first network device sends the first ACK to the first apparatus, the method further includes: The first network device receives the EPC sent by the first apparatus; the first network device measures the EPC, to obtain a second measurement result; the first network device sends the second measurement result to the core network device; and the core network device receives the second measurement result from the first network device, and performs positioning on the first apparatus based on the second measurement result. Therefore, the EPC of the first apparatus is measured during the inventory process, and the first apparatus is positioned.

Based on the first aspect or the second aspect, in a possible implementation, the frequency domain information of the positioning reference signal or the EPC of the first apparatus includes a first frequency domain offset, and the first frequency domain offset is an offset of a frequency domain position, occupied by the positioning reference signal or the EPC of the first apparatus, relative to a carrier center frequency. It can be learned that the first network device can configure the first frequency domain offset for the first apparatus by using the first ACK. This implements a configuration of a frequency domain resource occupied by the positioning reference signal or the EPC of the first apparatus.

Based on the first aspect or the second aspect, in a possible implementation, the method further includes: The first network device sends the inventory command to a second apparatus, where the inventory command is further used for inventory of the second apparatus; the first network device receives a second random number from the second apparatus; and the first network device sends second ACK to the second apparatus, where the second ACK indicates that the first network device successfully receives the second random number, the second ACK includes frequency domain information of a positioning reference signal or an EPC of the second apparatus, the frequency domain information includes a second frequency domain offset, the second frequency domain offset is an offset of a frequency domain position, occupied by the positioning reference signal or the EPC of the second apparatus, relative to the carrier center frequency, and the first frequency domain offset is different from the second frequency domain offset. It can be learned that the first network device can configure the first frequency domain offset for the first apparatus by using the first ACK, and configure the second frequency domain offset for the second apparatus by using the second ACK. The first frequency domain offset is different from the second frequency domain offset. This prevents the first apparatus and the second apparatus from sending the positioning reference signal or the EPC by using a same frequency domain resource, avoids positioning measurement interference, and improves positioning precision.

Based on the first aspect, in a possible implementation, the method further includes: The core network device sends a first excitation request to the first network device, where the first excitation request includes seventh information, and the seventh information indicates the first network device to excite the first apparatus and the second apparatus to send a positioning reference signal or an EPC. Correspondingly, the first network device receives the first excitation request from the core network device; and that the first network device performs positioning measurement on the first apparatus during or after the inventory process of the first apparatus includes: The first network device sends an excitation signal, where the excitation signal is used to excite the first apparatus and the second apparatus to send a positioning reference signal or an EPC; the first network device receives the positioning reference signal or the EPC from the first apparatus; the first network device measures the positioning reference signal or the EPC from the first apparatus, to obtain a third measurement result; the first network device receives the positioning reference signal or the EPC from the second apparatus; and the first network device measures the positioning reference signal or the EPC from the second apparatus, to obtain a fourth measurement result. It can be learned that the first network device can uniformly excite the first apparatus and the second apparatus to send the positioning reference signal or the EPC. In other words, the first network device can excite the first apparatus and the second apparatus at a time, thereby reducing overheads of excitation signaling.

Based on the first aspect, in a possible implementation, the method further includes: The first network device sends the third measurement result and the fourth measurement result to the core network device; the core network device receives the third measurement result and the fourth measurement result from the first network device; and the core network device performs positioning on the first apparatus based on the third measurement result, and performs positioning on the second apparatus based on the fourth measurement result.

Based on the second aspect, in a possible implementation, the method further includes: The core network device sends a first excitation request to the first network device, where the first excitation request includes seventh information, and the seventh information indicates the first network device to excite the first apparatus and the second apparatus to send a positioning reference signal or an EPC. Correspondingly, the first network device receives the first excitation request from the core network device; and the first network device sends an excitation signal, where the excitation signal is used to excite the first apparatus and the second apparatus to send a positioning reference signal or an EPC. In this implementation, the core network device indicates, by using the seventh information, the first network device to excite the first apparatus and the second apparatus to send the positioning reference signal or the EPC. The first network device can uniformly excite the first apparatus and the second apparatus to send the positioning reference signal or the EPC. In other words, the first network device can excite the first apparatus and the second apparatus at a time, thereby reducing overheads of excitation signaling.

Based on the first aspect or the second aspect, in a possible implementation, the first excitation request further includes EPCs respectively corresponding to a plurality of apparatuses in a first group, the first group includes the first apparatus and the second apparatus, and the seventh information indicates the first network device to excite the plurality of apparatuses in the first group to send a positioning reference signal or an EPC. In this implementation, the first excitation request may further include the EPCs respectively corresponding to the plurality of apparatuses in the first group. Therefore, the first network device is indicated to excite the plurality of apparatuses in the first group to send the positioning reference signal or the EPC. The first network device can excite the plurality of apparatuses at a time, thereby reducing signaling overheads.

Based on the first aspect, in a possible implementation, the method further includes: The core network device sends a second excitation request to the first network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signal or an EPC; and the first network device receives the second excitation request from the core network device. That the first network device performs positioning measurement on the first apparatus during or after the inventory process of the first apparatus includes: The first network device separately excites, based on the excitation time sequences respectively corresponding to the plurality of apparatuses, the plurality of apparatuses in the first group to send a positioning reference signal or an EPC; the first network device receives positioning reference signals or the EPCs sent by plurality of apparatuses in the first group; and the first network device separately measures the positioning reference signals or the EPCs from the plurality of apparatuses, to obtain corresponding measurement results. This avoids interference between positioning reference signals or EPCs sent by different apparatuses in the first group, avoids positioning measurement interference, and improves positioning precision.

Based on the first aspect, in a possible implementation, the method further includes: The first network device sends to the core network device, the measurement results obtained by measuring the positioning reference signals or the EPCs sent by the plurality of apparatuses; and the core network device receives, from the first network device, the measurement results obtained by measuring the positioning reference signals or the EPCs sent by the plurality of apparatuses, and separately performs positioning on the plurality of apparatuses based on the measurement results.

Based on the second aspect, in a possible implementation, the method further includes: The core network device sends a second excitation request to the first network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signal or an EPC. Correspondingly, the first network device receives the second excitation request from the core network device; and the first network device separately excites, based on the excitation time sequences respectively corresponding to the plurality of apparatuses, the plurality of apparatuses in the first group to send a positioning reference signal or an EPC. This avoids interference between positioning reference signals or EPCs sent by different apparatuses, avoids positioning measurement interference, and improves positioning precision.

Based on the first aspect, in a possible implementation, the method further includes: The first network device sends first configuration information to the first apparatus, where the first configuration information includes configuration information of the positioning reference signal of the first apparatus. This facilitates performing positioning measurement on the first apparatus based on the first configuration information during or after the inventory process.

Based on the first aspect or the second aspect, in a possible implementation, the method further includes: The first network device sends first configuration information to the core network device. Correspondingly, the core network device receives the first configuration information from the first network device. Therefore, the core network device requests the first network device to perform positioning measurement for the first apparatus. This facilitates performing positioning measurement on the first apparatus during or after the inventory process of the first apparatus.

A third aspect of this application provides an inventory method, including:

A first apparatus receives an inventory command from a first network device, where the inventory command is used for inventory of the first apparatus; the first apparatus sends a first random number to the first network device; and the first apparatus receives first ACK from the first network device, where the first ACK indicates that the first network device successfully receives the first random number, and the first ACK includes at least one of the following: a quantity of times of sending a positioning reference signal of the first apparatus or frequency domain information of the positioning reference signal of the first apparatus, or the first ACK includes at least one of the following: a quantity of times of sending an EPC of the first apparatus or frequency domain information of the EPC.

In the foregoing technical solution, in a process of performing inventory on the first apparatus, the first apparatus receives the first ACK from the first network device. The first ACK includes the at least one of the following: the quantity of times of sending the positioning reference signal of the first apparatus or the frequency domain information of the positioning reference signal, or the first ACK includes the at least one of the following: the quantity of times of sending the EPC of the first apparatus or the frequency domain information of the EPC. This facilitates performing positioning on the first apparatus during or after an inventory process of the first apparatus. The first ACK carries related configuration information of the positioning reference signal or the EPC of the first apparatus. This helps the first network device send dedicated configuration information to each apparatus, and helps improve positioning precision. In another aspect, signaling during the inventory process is reused, and signaling overheads are reduced.

Based on the third aspect, in a possible implementation, the first ACK further includes fifth information, and the fifth information indicates the first apparatus to send the positioning reference signal after the EPC is sent; or the first ACK further includes sixth information, and the sixth information indicates that the EPC sent by the first apparatus is used to perform positioning measurement on the first apparatus. In this implementation, the first ACK carries the fifth information or the sixth information, to indicate a positioning order. The first apparatus is excited, by using the fifth information or the sixth information, to send the positioning reference signal or the EPC, so that the first network device performs positioning measurement on the first apparatus during or after the inventory process. In another aspect, signaling during the inventory process is reused, and signaling overheads are reduced.

Based on the third aspect, in a possible implementation, after the first apparatus receives the first ACK from the first network device, the method further includes: The first apparatus sends the positioning reference signal or the EPC to the first network device based on the first ACK. Therefore, the first apparatus sends the positioning reference signal or the EPC during or after the inventory process, so that the first network device performs positioning measurement on the first apparatus.

Based on the third aspect, in a possible implementation, the frequency domain information of the positioning reference signal or the EPC of the first apparatus includes a first frequency domain offset, and the first frequency domain offset is an offset of a frequency domain position, occupied by the positioning reference signal or the EPC of the first apparatus, relative to a carrier center frequency. This implements a configuration of a frequency domain resource occupied by the positioning reference signal or the EPC of the first apparatus.

Based on the third aspect, in a possible implementation, the method further includes: The first apparatus receives first configuration information from the first network device, where the first configuration information includes configuration information of the positioning reference signal of the first apparatus. Therefore, the first network device performs positioning measurement on the first apparatus.

Based on the third aspect, in a possible implementation, the method further includes: The first apparatus sends the positioning reference signal or the EPC to the first network device based on the first configuration information and the first ACK. Therefore, the first network device performs positioning measurement on the first apparatus.

A fourth aspect of this application provides an inventory method, including:

A first apparatus receives an inventory command from a first network device, where the inventory command is used for inventory of the first apparatus; the first apparatus sends a first random number to the first network device; and the first apparatus receives first ACK from the first network device, where the first ACK indicates that the first network device successfully receives the first random number; and the first ACK includes fifth information, and the fifth information indicates that the first apparatus sends a positioning reference signal after an EPC is sent; or the first ACK includes sixth information, and the sixth information indicates that the EPC sent by the first apparatus is used to perform positioning measurement on the first apparatus.

In the foregoing technical solution, the first apparatus receives the first ACK from the first network device. The first ACK carries the fifth information or the sixth information, to indicate a positioning order, and the first apparatus is excited, by using the fifth information or the sixth information, to send the positioning reference signal or the EPC. This is convenient to perform positioning measurement on the first apparatus during or after an inventory process. In another aspect, signaling during the inventory process is reused, and signaling overheads are reduced.

Based on the fourth aspect, in a possible implementation, the first ACK includes at least one of the following: a quantity of times of sending the positioning reference signal of the first apparatus or frequency domain information of the positioning reference signal, or the first ACK includes at least one of the following: a quantity of times of sending the EPC of the first apparatus or frequency domain information of the EPC. In this implementation, the first ACK carries related configuration information of the positioning reference signal or the EPC of the first apparatus. This helps the first network device send dedicated configuration information to each apparatus, and helps improve positioning precision. In another aspect, signaling during the inventory process is reused, and signaling overheads are reduced.

Based on the fourth aspect, in a possible implementation, the frequency domain information of the positioning reference signal or the EPC of the first apparatus includes a first frequency domain offset, and the first frequency domain offset is an offset of a frequency domain position, occupied by the positioning reference signal or the EPC of the first apparatus, relative to a carrier center frequency. This implements a configuration of a frequency domain resource occupied by the positioning reference signal or the EPC of the first apparatus.

Based on the fourth aspect, in a possible implementation, after the first apparatus receives the first ACK from the first network device, the method further includes: The first apparatus sends the positioning reference signal or the EPC to the first network device based on the first ACK. Therefore, the first apparatus sends the positioning reference signal or the EPC during or after the inventory process, so that the first network device performs positioning measurement on the first apparatus.

Based on the fourth aspect, in a possible implementation, the method further includes: The first apparatus receives first configuration information from the first network device, where the first configuration information includes configuration information of the positioning reference signal of the first apparatus.

Based on the fourth aspect, in a possible implementation, the method further includes: The first apparatus sends the positioning reference signal or the EPC to the first network device based on the first configuration information and the first ACK. Therefore, the first apparatus sends the positioning reference signal or the EPC based on the first configuration information and the first ACK during or after the inventory process, so that the first network device performs positioning measurement on the first apparatus.

A fifth aspect of this application provides a positioning measurement method. The method includes:

A first network device receives an inventory request from a core network device, where the inventory request is used to request inventory of a first apparatus, the inventory request includes first information, and the first information indicates the first network device to perform positioning measurement on a first apparatus; and the first network device performs positioning measurement on the first apparatus during or after an inventory process of the first apparatus.

It can be learned from the foregoing technical solution that the first network device receives the inventory request. The inventory request includes the first information, and the first information indicates the first network device to perform positioning measurement on the first apparatus, so that the first network device performs positioning measurement on the first apparatus during or after the inventory process of the first apparatus, thereby meeting a positioning requirement. In another aspect, the core network device includes the first information in the inventory request. Therefore, existing signaling is reused, and signaling overheads are reduced.

A sixth aspect of this application provides a positioning measurement method. The method includes:
A first network device receives an inventory request from a core network device, where the inventory request is used to request inventory of a first apparatus, the inventory request includes first information, and the first information indicates the first network device to perform positioning measurement on the first apparatus during or after an inventory process of the first apparatus; and the first network device sends first configuration information to the first apparatus, where the first configuration information includes configuration information of a positioning reference signal of the first apparatus.

It can be learned from the foregoing technical solution that the inventory request includes the first information, and the first information indicates the first network device to perform positioning measurement on the first apparatus during or after the inventory process of the first apparatus; and the first network device sends the first configuration information to the first apparatus, where the first configuration information includes the configuration information of the positioning reference signal of the first apparatus. This facilitates performing positioning measurement on the first apparatus during or after the inventory process, thereby meeting a positioning requirement during or after the inventory process. In another aspect, the inventory request includes the first information. Therefore, existing signaling is reused, and signaling overheads are reduced.

Based on the fifth aspect or the sixth aspect, in a possible implementation, the inventory request further includes at least one of the following: second information, third information, recommended configuration information, or fourth information, where the second information indicates a positioning manner of performing positioning measurement on the first apparatus, and the positioning manner includes performing positioning measurement on the first apparatus based on a positioning reference signal sent by the first apparatus, or performing positioning measurement on the first apparatus based on an EPC sent by the first apparatus; the third information indicates to perform positioning measurement on the first apparatus during the inventory process, or perform positioning measurement on the first apparatus after the inventory process; the recommended configuration information includes positioning reference signal configuration information recommended by the core network device; and the fourth information indicates a measurement quantity type of positioning measurement performed on the first network device. In this implementation, content carried in the inventory request is shown. Therefore, the first network device configures, with reference to these contents, appropriate configuration information for the first apparatus, so that positioning measurement is performed on the first apparatus during or after the inventory process.

Based on the fifth aspect or the sixth aspect, in a possible implementation, after the first network device receives the inventory request from the core network device, the method further includes: The first network device sends an inventory command to the first apparatus, where the inventory command is used for inventory of the first apparatus; the first network device receives a first random number from the first apparatus; and the first network device sends first ACK to the first apparatus, where the first ACK indicates that the first network device successfully receives the first random number.

Based on the fifth aspect or the sixth aspect, in a possible implementation, the first ACK includes at least one of the following: a quantity of times of sending the positioning reference signal of the first apparatus or frequency domain information of the positioning reference signal, or the first ACK includes at least one of the following: a quantity of times of sending the EPC of the first apparatus or frequency domain information of the EPC. In this implementation, the first network device can send dedicated configuration information to the first apparatus by using the first ACK during the inventory process. This helps improve positioning precision. For example, the first network device configures the frequency domain information of the positioning reference signal or the EPC for the first apparatus by using the first ACK. This helps prevent different apparatuses from using a same frequency domain resource, avoid positioning measurement interference, and improve positioning precision.

Based on the fifth aspect or the sixth aspect, in a possible implementation, the first ACK further includes fifth information, and the fifth information indicates the first apparatus to send the positioning reference signal after the EPC is sent; or the first ACK further includes sixth information, and the sixth information indicates that the EPC sent by the first apparatus is used to perform positioning measurement on the first apparatus. In this implementation, the first ACK further carries the fifth information or the sixth information, to indicate a positioning order to the first apparatus. Further, the first network device can excite, by using the fifth information or the sixth information, the first apparatus to send the positioning reference signal or the EPC, so as to perform positioning measurement on the first apparatus.

Based on the fifth aspect, in a possible implementation, that the first network device performs positioning measurement on the first apparatus during or after the inventory process of the first apparatus includes: The first network device receives the positioning reference signal from the first apparatus; and the first network device measures the positioning reference signal, to obtain a first measurement result. Therefore, the positioning reference signal of the first apparatus is measured during or after the inventory process, and positioning measurement is performed on the first apparatus.

Based on the fifth aspect, in a possible implementation, the method further includes: The first network device sends the first measurement result to the first core network device.

Based on the fifth aspect, in a possible implementation, that the first network device performs positioning measurement on the first apparatus during or after the inventory process of the first apparatus includes: The first network device receives the EPC sent by the first apparatus; and the first network device measures the EPC, to obtain a second measurement result. Therefore, the EPC sent by the first apparatus is measured during or after the inventory process, and positioning measurement is performed on the first apparatus.

Based on the fifth aspect, in a possible implementation, the method further includes: The first network device sends the second measurement result to the first core network device.

Based on the sixth aspect, in a possible implementation, after the first network device sends the first ACK to the first apparatus, the method further includes: The first network device receives the positioning reference signal from the first apparatus; the first network device measures the positioning reference signal, to obtain a first measurement result; and the first network device sends the first measurement result to the core network device. Therefore, the positioning reference signal of the first apparatus is measured after the inventory process, and positioning measurement is performed on the first apparatus.

Based on the sixth aspect, in a possible implementation, after the first network device sends the first ACK to the first apparatus, the method further includes: The first network device receives the EPC sent by the first apparatus; the first network device measures the EPC, to obtain a second measurement result; and the first network device sends the second measurement result to the core network device. Therefore, the EPC sent by the first apparatus is measured during the inventory process, and positioning measurement is performed on the first apparatus.

Based on the fifth aspect or the sixth aspect, in a possible implementation, the frequency domain information of the positioning reference signal or the EPC of the first apparatus includes a first frequency domain offset, and the first frequency domain offset is an offset of a frequency domain position, occupied by the positioning reference signal or the EPC of the first apparatus, relative to a carrier center frequency. It can be learned that the first network device can configure the first frequency domain offset for the first apparatus by using the first ACK. This implements a configuration of a frequency domain resource occupied by the positioning reference signal or the EPC of the first apparatus.

Based on the fifth aspect or the sixth aspect, in a possible implementation, the method further includes: The first network device sends the inventory command to a second apparatus, where the inventory command is further used for inventory of the second apparatus; the first network device receives a second random number from the second apparatus; and the first network device sends second ACK to the second apparatus, where the second ACK indicates that the first network device successfully receives the second random number, the second ACK includes frequency domain information of a positioning reference signal or an EPC of the second apparatus, the frequency domain information includes a second frequency domain offset, the second frequency domain offset is an offset of a frequency domain position, occupied by the positioning reference signal or the EPC of the second apparatus, relative to the carrier center frequency, and the first frequency domain offset is different from the second frequency domain offset. It can be learned that the first network device configures the first frequency domain offset for the first apparatus by using the first ACK, and configures the second frequency domain offset for the second apparatus by using the second ACK. This prevents the first apparatus and the second apparatus from using a same frequency domain resource, avoids positioning measurement interference, and improves positioning precision.

Based on the fifth aspect, in a possible implementation, the method further includes: The first network device receives a first excitation request from the core network device, where the first excitation request includes seventh information, and the seventh information indicates the first network device to excite the first apparatus and the second apparatus to send a positioning reference signal or an EPC; and that the first network device performs positioning measurement on the first apparatus during or after the inventory process of the first apparatus includes: The first network device sends an excitation signal, where the excitation signal is used to excite the first apparatus and the second apparatus to send a positioning reference signal or an EPC; the first network device receives the positioning reference signal or the EPC from the first apparatus; the first network device measures the positioning reference signal or the EPC from the first apparatus, to obtain a third measurement result; the first network device receives the positioning reference signal or the EPC from the second apparatus; and the first network device measures the positioning reference signal or the EPC from the second apparatus, to obtain a fourth measurement result. It can be learned that the first network device can uniformly excite the first apparatus and the second apparatus to send the positioning reference signal or the EPC. In other words, the first network device can excite the first apparatus and the second apparatus at a time, thereby reducing overheads of excitation signaling.

Based on the fifth aspect, in a possible implementation, the method further includes: The first network device sends the third measurement result and the fourth measurement result to the core network device. Therefore, the core network device performs positioning on the first apparatus and the second apparatus.

Based on the sixth aspect, in a possible implementation, the method further includes: The first network device receives a first excitation request from the core network device, where the first excitation request includes seventh information, and the seventh information indicates the first network device to excite the first apparatus and the second apparatus to send a positioning reference signal or an EPC; and the first network device sends an excitation signal, where the excitation signal is used to excite the first apparatus and the second apparatus to send a positioning reference signal or an EPC. It can be learned that the first network device can uniformly excite the first apparatus and the second apparatus to send the positioning reference signal or the EPC. In other words, the first network device can excite a plurality of apparatuses at a time to send a positioning reference signal or an EPC. This reduces signaling overheads and improves positioning efficiency.

Based on the fifth aspect or the sixth aspect, in a possible implementation, the first excitation request further includes EPCs respectively corresponding to a plurality of apparatuses in a first group, the first group includes the first apparatus and the second apparatus, and the seventh information indicates the first network device to excite the plurality of apparatuses in the first group to send a positioning reference signal or an EPC. Therefore, the first network device uniformly excites the plurality of apparatuses in the first group to send the positioning reference signal or the EPC. This reduces signaling overheads and improves positioning efficiency.

Based on the fifth aspect, in a possible implementation, the method further includes: The first network device receives a second excitation request from the core network device, the second excitation request includes eighth information, EPCs of a plurality of apparatuses in a first group, and ninth information, the first group includes the first apparatus, the ninth information indicates excitation time sequences receptively corresponding to the plurality of apparatuses in the first group, and the eighth information indicates the first network device to excite, based on the excitation time sequences receptively corresponding to the plurality of apparatuses, the plurality of apparatuses in the first group to send a positioning reference signal or an EPC; and that the first network device performs positioning measurement on the first apparatus during or after the inventory process of the first apparatus includes: The first network device separately excites, based on the excitation time sequences receptively corresponding to the plurality of apparatuses, the plurality of apparatuses in the first group to send a positioning reference signal or an EPC; the first network device receives positioning reference signals or the EPCs sent by plurality of apparatuses in the first group; and the first network device separately measures the positioning reference signals or the EPCs from the plurality of apparatuses, to obtain corresponding measurement results. This avoids interference between positioning reference signals or EPCs sent by different apparatuses in the first group, avoids positioning measurement interference, and improves positioning precision.

Based on the fifth aspect, in a possible implementation, the method further includes: The first network device sends to the core network device, the measurement results obtained by measuring the positioning reference signals or EPCs sent by the plurality of apparatuses. Therefore, the core network device separately performs positioning on the plurality of apparatuses based on the measurement results.

Based on the sixth aspect, in a possible implementation, the method further includes: The first network device receives a second excitation request from the core network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signal or an EPC; and the first network device separately excites, based on the excitation time sequences respectively corresponding to the plurality of apparatuses, the plurality of apparatuses in the first group to send a positioning reference signal or an EPC. In this implementation, the first network device separately excites, based on the excitation time sequences corresponding to the apparatuses, the plurality of apparatuses in the first group to send the positioning reference signal or the EPC. This avoids positioning measurement interference between different apparatuses, and improves positioning precision.

Based on the fifth aspect or the sixth aspect, in a possible implementation, the method further includes: The first network device sends first configuration information to the core network device. Therefore, the core network device requests the plurality of network devices to perform positioning on the first apparatus.

Based on the fifth aspect, in a possible implementation, the method further includes: The first network device sends first configuration information to the first apparatus, where the first configuration information includes configuration information of the positioning reference signal of the first apparatus. This facilitates performing positioning measurement on the first apparatus based on the first configuration information during or after the inventory process.

A seventh aspect of this application provides a positioning measurement method, including:
A core network device determines an inventory request, where the inventory request is used to request inventory of a first apparatus, the inventory request includes first information, and the first information indicates a first network device to perform positioning measurement on the first apparatus; and the core network device sends the inventory request to the first network device.

It can be learned from the foregoing technical solution that the core network device sends the inventory request to the first network device. The inventory request includes the first information, and the first information indicates the first network device to perform positioning measurement on the first apparatus, so that the first network device performs positioning measurement on the first apparatus during or after an inventory process of the first apparatus, thereby meeting a positioning requirement. In another aspect, the core network device includes the first information in the inventory request. Therefore, existing signaling is reused, and signaling overheads are reduced.

An eighth aspect of this application provides a positioning measurement method, including:

A core network device sends an inventory request to a first network device, where the inventory request is used to request inventory of a first apparatus, the inventory request includes first information, and the first information indicates the first network device to perform positioning measurement on the first apparatus during or after an inventory process of the first apparatus; and the core network device receives first configuration information from the first network device, where the first configuration information includes configuration information of a positioning reference signal of the first apparatus.

In the foregoing technical solution, the inventory request includes the first information, and the first information indicates the first network device to perform positioning measurement on the first apparatus during or after the inventory process of the first apparatus. The core network device receives the first configuration information from the first network device. The first configuration information includes the configuration information of the positioning reference signal. This facilitates performing positioning measurement on the first apparatus during or after the inventory process, thereby meeting a positioning requirement during the inventory process. In another aspect, the core network device includes the first information in the inventory request. Therefore, existing signaling is reused, and signaling overheads are reduced.

Based on the seventh aspect or the eighth aspect, in a possible implementation, the inventory request further includes at least one of the following: second information, third information, recommended configuration information, or fourth information, where the second information indicates a positioning manner of performing positioning measurement on the first apparatus, and the positioning manner includes performing positioning measurement on the first apparatus based on a positioning reference signal sent by the first apparatus, or performing positioning measurement on the first apparatus based on an EPC sent by the first apparatus; the third information indicates to perform positioning measurement on the first apparatus during the inventory process, or perform positioning measurement on the first apparatus after the inventory process; the recommended configuration information includes positioning reference signal configuration information recommended by the core network device; and the fourth information indicates a measurement quantity type of positioning measurement performed on the first apparatus. In this implementation, content further carried in the inventory request is shown. Therefore, the first network device configures, with reference to content carried in the inventory request, appropriate configuration information for the first apparatus, so that positioning measurement is performed on the first apparatus during or after the inventory process.

Based on the seventh aspect or the eighth aspect, in a possible implementation, the method further includes: The core network device receives a first measurement result from the first network device, where the first measurement result is obtained by the first network device by measuring the positioning reference signal sent by the first apparatus; and the core network device performs positioning on the first apparatus based on the first measurement result.

Based on the seventh aspect or the eighth aspect, in a possible implementation, the method further includes: The core network device receives a second measurement result from the first network device, where the second measurement result is obtained by the first network device by measuring the EPC sent by the first apparatus; and the core network device performs positioning on the first apparatus based on the second measurement result.

Based on the seventh aspect or the eighth aspect, in a possible implementation, after the core network device sends the inventory request to the first network device, the method further includes: The core network device sends a first excitation request to the first network device, where the first excitation request includes seventh information, and the seventh information indicates the first network device to excite the first apparatus and a second apparatus to send a positioning reference signal or an EPC. It can be learned that the first network device can uniformly excite the first apparatus and the second apparatus to send the positioning reference signal or the EPC. In other words, the first network device can excite a plurality of apparatuses at a time to send a positioning reference signal or an EPC. This reduces signaling overheads and improves positioning efficiency.

Based on the seventh aspect or the eighth aspect, in a possible implementation, the method further includes: The core network device receives a third measurement result and a fourth measurement result from the first network device, where the third measurement result is obtained by the first network device by measuring the positioning reference signal or the EPC sent by the first apparatus, and the fourth measurement result is obtained by the first network device by measuring the positioning reference signal or the EPC sent by the second apparatus; and the core network device performs positioning on the first apparatus based on the third measurement result, and performs positioning on the second apparatus based on the fourth measurement result.

Based on the seventh aspect or the eighth aspect, in a possible implementation, the first excitation request further includes EPCs respectively corresponding to a plurality of apparatuses in a first group, the first group includes the first apparatus and the second apparatus, and the seventh information indicates the first network device to excite the plurality of apparatuses in the first group to send a positioning reference signal or an EPC. Therefore, the first network device uniformly excites the plurality of apparatuses in the first group to send the positioning reference signal or the EPC. This reduces signaling overheads and improves positioning efficiency.

Based on the seventh aspect or the eighth aspect, in a possible implementation, after the core network device sends the inventory request to the first network device, the method further includes: The core network device sends a second excitation request to the first network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signals or an EPC. Therefore, the first network device excites, based on the excitation time sequences respectively corresponding to the apparatuses, the plurality of apparatuses in the first group to send the positioning reference signal or the EPC. This avoids positioning measurement interference between different apparatuses, and improves positioning precision.

Based on the seventh aspect or the eighth aspect, in a possible implementation, the method further includes: The core network device receives, from the first network device, measurement results obtained by measuring the positioning reference signals or the EPCs sent by the plurality of apparatuses in the first group; and the core network device separately performs positioning on the plurality of apparatuses based on the measurement results.

Based on the seventh aspect, in a possible implementation, the method further includes: The core network device receives first configuration information from the first network device, where the first configuration information includes configuration information of the positioning reference signal of the first apparatus. Therefore, the core network device requests the plurality of network devices to perform positioning on the first apparatus.

A ninth aspect of this application provides a positioning measurement method, including:

A core network device sends an inventory request to a first network device, where the inventory request is used to request inventory of a first apparatus and a second apparatus, the inventory request includes first information, and the first information indicates the first network device to perform positioning measurement on the first apparatus and the second apparatus. Correspondingly, the first network device receives the inventory request from the core network device; and the first network device performs positioning measurement on the first apparatus during or after an inventory process of the first apparatus, and performs positioning measurement on the second apparatus during or after an inventory process of the second apparatus.

In the foregoing technical solution, the inventory request includes the first information. The first information indicates the first network device to perform positioning measurement on the first apparatus and the second apparatus during the inventory process of the first apparatus, so that the first network device performs positioning measurement on the first apparatus during or after the inventory process of the first apparatus, and performs positioning measurement on the second apparatus during or after the inventory process of the second apparatus, thereby meeting a positioning requirement during or after the inventory process. In another aspect, the core network device includes the first information in the inventory request. Therefore, existing signaling is reused, and signaling overheads are reduced.

A tenth aspect of this application provides a positioning measurement method, including:

A core network device sends an inventory request to a first network device, where the inventory request is used to request inventory of a first apparatus and a second apparatus, the inventory request includes first information, and the first information indicates the first network device to perform positioning measurement on the first apparatus during or after an inventory process of the first apparatus and perform positioning measurement on the second apparatus during or after an inventory process of the second apparatus. Correspondingly, the first network device receives the inventory request from the core network device; and the first network device sends first configuration information to the first apparatus and the second apparatus, where the first configuration information includes configuration information of a positioning reference signal.

In the foregoing technical solution, the inventory request includes the first information. The first network device sends the first configuration information to the first apparatus and the second apparatus. The first configuration information includes the configuration information of the positioning reference signal. This facilitates performing positioning measurement on the first apparatus and the second apparatus during or after the inventory process, thereby meeting a positioning requirement during or after the inventory process. In another aspect, the core network device includes the first information in the inventory request. Therefore, existing signaling is reused, and signaling overheads are reduced.

Based on the ninth aspect or the tenth aspect, in a possible implementation, the inventory request further includes at least one of the following: second information, third information, recommended configuration information, or fourth information, where the second information indicates a positioning manner of performing positioning measurement on the first apparatus and the second apparatus, and the positioning manner includes performing positioning measurement on the apparatus based on a positioning reference signal sent by the apparatus, or performing positioning measurement on the apparatus based on an EPC sent by the apparatus; the third information indicates to perform positioning measurement on the first apparatus and the second apparatus during the inventory process, or perform positioning measurement on the first apparatus and the second apparatus after the inventory process; the recommended configuration information includes positioning reference signal configuration information recommended by the core network device; and the fourth information indicates a measurement quantity type of positioning measurement performed on the first apparatus and the second apparatus. In this implementation, content further carried in the inventory request is shown. Therefore, the first network device configures, with reference to content carried in the inventory request, appropriate configuration information for the first apparatus and the second apparatus. In this way, positioning measurement is performed on the first apparatus and the second apparatus during the inventory process.

Based on the ninth aspect or the tenth aspect, in a possible implementation, after the first network device receives the inventory request from the core network device, the method further includes: The first network device sends an inventory command to the first apparatus, where the inventory command is used for inventory of the first apparatus; the first network device receives a first random number from the first apparatus; and the first network device sends first ACK to the first apparatus, where the first ACK indicates that the first network device successfully receives the first random number.

Based on the ninth aspect or the tenth aspect, in a possible implementation, the first ACK includes frequency domain information of a positioning reference signal or an EPC of the first apparatus, the frequency domain information includes a first frequency domain offset, and the first frequency domain offset is an offset of a frequency domain position, occupied by the positioning reference signal or the EPC of the first apparatus, relative to a carrier center frequency. In this implementation, the first network device can send dedicated configuration information to the first apparatus by using the first ACK during the inventory process. This helps improve positioning precision. For example, this helps prevent different apparatuses from using a same frequency domain resource, avoid positioning measurement interference, and improves positioning precision.

Based on the ninth aspect or the tenth aspect, in a possible implementation, the first ACK further includes a quantity of times of sending the positioning reference signal of the first apparatus, or a quantity of times of sending the EPC of the first apparatus.

Based on the ninth aspect or the tenth aspect, in a possible implementation, the first ACK further includes fifth information, and the fifth information indicates the first apparatus to send the positioning reference signal after the EPC is sent; or the first ACK further includes sixth information, and the sixth information indicates that the EPC sent by the first apparatus is used to perform positioning measurement on the first apparatus. In this implementation, the first ACK carries the fifth information or the sixth information, to indicate a positioning order. The first apparatus is excited, by using the fifth information or the sixth information, to send the positioning reference signal or the EPC, so that the first network device performs positioning measurement on the first apparatus during or after the inventory process. In another aspect, signaling during the inventory process is reused, and signaling overheads are reduced.

Based on the ninth aspect or the tenth aspect, in a possible implementation, the method further includes: The first network device sends the inventory command to a second apparatus, where the inventory command is further used for inventory of the second apparatus; the first network device receives a second random number from the second apparatus; and the first network device sends second ACK to the second apparatus, where the second ACK indicates that the first network device successfully receives the second random number, the second ACK includes frequency domain information of a positioning reference signal or an EPC of the second apparatus, the frequency domain information includes a second frequency domain offset, the second frequency domain offset is an offset of a frequency domain position, occupied by the positioning reference signal or the EPC of the second apparatus, relative to the carrier center frequency, and the first frequency domain offset is different from the second frequency domain offset. It can be learned that the first network device can configure the first frequency domain offset for the first apparatus by using the first ACK, and configure the second frequency domain offset for the second apparatus by using the second ACK. The first frequency domain offset is different from the second frequency domain offset. This prevents the first apparatus and the second apparatus from sending the positioning reference signal or the EPC by using a same frequency domain resource, avoids positioning measurement interference, and improves positioning precision.

Based on the ninth aspect or the tenth aspect, in a possible implementation, the second ACK further includes a quantity of times of sending the positioning reference signal of the second apparatus, or a quantity of times of sending the EPC of the second apparatus.

Based on the ninth aspect, in a possible implementation, the method further includes: The core network device sends a first excitation request to the first network device, where the first excitation request includes seventh information, and the seventh information indicates the first network device to excite the first apparatus and the second apparatus to send a positioning reference signal or an EPC. Correspondingly, the first network device receives the first excitation request from the core network device; and that the first network device performs positioning measurement on the first apparatus during or after the inventory process of the first apparatus, and performs positioning measurement on the second apparatus during or after the inventory process of the second apparatus includes: The first network device sends an excitation signal, where the excitation signal is used to excite the first apparatus and the second apparatus to send a positioning reference signal or an EPC; the first network device receives the positioning reference signal or the EPC from the first apparatus; the first network device measures the positioning reference signal or the EPC from the first apparatus, to obtain a third measurement result; the first network device receives the positioning reference signal or the EPC from the second apparatus; and the first network device measures the positioning reference signal or the EPC from the second apparatus, to obtain a fourth measurement result. It can be learned that the first network device can uniformly excite the first apparatus and the second apparatus to send the positioning reference signal or the EPC. In other words, the first network device can excite the first apparatus and the second apparatus at a time, thereby reducing overheads of excitation signaling.

Based on the ninth aspect, in a possible implementation, the method further includes: The first network device sends the third measurement result and the fourth measurement result to the core network device; the core network device receives the third measurement result and the fourth measurement result from the first network device; and the core network device performs positioning on the first apparatus based on the third measurement result, and performs positioning on the second apparatus based on the fourth measurement result.

Based on the tenth aspect, in a possible implementation, the method further includes: The core network device sends a first excitation request to the first network device, where the first excitation request includes seventh information, and the seventh information indicates the first network device to excite the first apparatus and the second apparatus to send a positioning reference signal or an EPC. Correspondingly, the first network device receives the first excitation request from the core network device; and the first network device sends an excitation signal, where the excitation signal is used to excite the first apparatus and the second apparatus to send a positioning reference signal or an EPC. In this implementation, the core network device indicates, by using the seventh information, the first network device to excite the first apparatus and the second apparatus to send the positioning reference signal. The first network device can uniformly excite the first apparatus and the second apparatus to send the positioning reference signal. In other words, the first network device can excite the first apparatus and the second apparatus at a time, thereby reducing overheads of excitation signaling.

Based on the ninth aspect or the tenth aspect, in a possible implementation, the first excitation request further includes EPCs respectively corresponding to a plurality of apparatuses in a first group, the first group includes the first apparatus and the second apparatus, and the seventh information indicates the first network device to excite the plurality of apparatuses in the first group to send a positioning reference signal or an EPC. In this implementation, the first excitation request may further include the EPCs respectively corresponding to the plurality of apparatuses in the first group. Therefore, the first network device is indicated to excite the plurality of apparatuses in the first group to send the positioning reference signal or the EPC. The first network device can excite the plurality of apparatuses at a time, thereby reducing signaling overheads.

Based on the ninth aspect, in a possible implementation, the method further includes: The core network device sends a second excitation request to the first network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signal or an EPC; and the first network device receives the second excitation request from the core network device. That the first network device performs positioning measurement on the first apparatus during or after the inventory process of the first apparatus, and performs positioning measurement on the second apparatus during or after the inventory process of the second apparatus includes: The first network device separately excites, based on the excitation time sequences respectively corresponding to the plurality of apparatuses, the plurality of apparatuses in the first group to send a positioning reference signal or an EPC; the first network device receives positioning reference signals or the EPCs sent by plurality of apparatuses in the first group; and the first network device separately measures the positioning reference signals or the EPCs from the plurality of apparatuses, to obtain corresponding measurement results. This avoids interference between positioning reference signals or EPCs sent by different apparatuses in the first group, avoids positioning measurement interference, and improves positioning precision.

Based on the ninth aspect, in a possible implementation, the method further includes: The first network device sends to the core network device, the measurement results obtained by measuring the positioning reference signals or the EPCs sent by the plurality of apparatuses; and the core network device receives, from the first network device, the measurement results obtained by measuring the positioning reference signals or the EPCs sent by the plurality of apparatuses, and separately performs positioning on the plurality of apparatuses based on the measurement results.

Based on the tenth aspect, in a possible implementation, the method further includes: The core network device sends a second excitation request to the first network device, where the second excitation request includes eighth information, EPCs of a plurality of apparatuses in a first group, and ninth information, the first group includes the first apparatus and the second apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signal or an EPC. Correspondingly, the first network device receives the second excitation request from the core network device; and the first network device separately excites, based on the excitation time sequences respectively corresponding to the plurality of apparatuses, the plurality of apparatuses in the first group to send a positioning reference signal or an EPC. This avoids interference between positioning reference signals or EPCs sent by different apparatuses, avoids positioning measurement interference, and improves positioning precision.

Based on the tenth aspect, in a possible implementation, the method further includes: The first network device sends first configuration information to the core network device. Correspondingly, the core network device receives the first configuration information from the first network device. Therefore, the core network device requests the network device to perform positioning measurement for the first apparatus and the second apparatus. This facilitates performing positioning measurement on the first apparatus and the second apparatus during or after the inventory process.

An eleventh aspect of this application provides a first apparatus, including:
a receiving module, configured to receive an inventory command from a first network device, where the inventory command is used for inventory of the first apparatus; and
a sending module, configured to send a first random number to the first network device, where
the receiving module is further configured to receive first ACK from the first network device, where the first ACK indicates that the first network device successfully receives the first random number, and the first ACK includes at least one of the following: a quantity of times of sending a positioning reference signal of the first apparatus or frequency domain information of the positioning reference signal, or the first ACK includes at least one of the following: a quantity of times of sending an EPC of the first apparatus or frequency domain information of the EPC.

Based on the eleventh aspect, in a possible implementation, the first ACK further includes fifth information, and the fifth information indicates the first apparatus to send the positioning reference signal after the EPC is sent; or the first ACK further includes sixth information, and the sixth information indicates that the EPC sent by the first apparatus is used to perform positioning measurement on the first apparatus.

Based on the eleventh aspect, in a possible implementation, the sending module is further configured to send the positioning reference signal or the EPC to the first network device based on the first ACK.

Based on the eleventh aspect, in a possible implementation, the frequency domain information of the positioning reference signal or the EPC of the first apparatus includes a first frequency domain offset, and the first frequency domain offset is an offset of a frequency domain position, occupied by the positioning reference signal or the EPC of the first apparatus, relative to a carrier center frequency.

Based on the eleventh aspect, in a possible implementation, the receiving module is further configured to receive first configuration information from the first network device, where the first configuration information includes configuration information of the positioning reference signal of the first apparatus.

Based on the eleventh aspect, in a possible implementation, the sending module is further configured to send the positioning reference signal or the EPC to the first network device based on the first configuration information and the first ACK.

A twelfth aspect of this application provides a first apparatus, including:
a receiving module, configured to receive an inventory command from a first network device, where the inventory command is used for inventory of the first apparatus; and
a sending module, configured to send a first random number to the first network device, where
the receiving module is further configured to receive first ACK from the first network device, where the first ACK indicates that the first network device successfully receives the first random number; and the first ACK includes fifth information, and the fifth information indicates that the first apparatus sends a positioning reference signal after an EPC is sent; or the first ACK includes sixth information, and the sixth information indicates that the EPC sent by the first apparatus is used to perform positioning measurement on the first apparatus.

Based on the twelfth aspect, in a possible implementation, the first ACK includes at least one of the following: a quantity of times of sending the positioning reference signal of the first apparatus or frequency domain information of the positioning reference signal, or the first ACK includes at least one of the following: a quantity of times of sending the EPC of the first apparatus or frequency domain information of the EPC.

Based on the twelfth aspect, in a possible implementation, the frequency domain information of the positioning reference signal or the EPC of the first apparatus includes a first frequency domain offset, and the first frequency domain offset is an offset of a frequency domain position, occupied by the positioning reference signal or the EPC of the first apparatus, relative to a carrier center frequency.

Based on the twelfth aspect, in a possible implementation, the sending module is further configured to send the positioning reference signal or the EPC to the first network device based on the first ACK.

Based on the twelfth aspect, in a possible implementation, first configuration information is received from the first network device, where the first configuration information includes configuration information of the positioning reference signal of the first apparatus.

Based on the twelfth aspect, in a possible implementation, the sending module is further configured to send the positioning reference signal or the EPC to the first network device based on the first configuration information and the first ACK.

A thirteenth aspect of this application provides a communication apparatus, including:
a receiving module, configured to receive an inventory request from a core network device, where the inventory request is used to request inventory of a first apparatus, the inventory request includes first information, and the first information indicates the communication apparatus to perform positioning measurement on the first apparatus; and
a processing module, configured to perform positioning measurement on the first apparatus during or after an inventory process of the first apparatus.

A fourteenth aspect of this application provides a communication apparatus, including:
a receiving module, configured to receive an inventory request from a core network device, where the inventory request is used to request inventory of a first apparatus, the inventory request includes first information, and the first information indicates the communication apparatus to perform positioning measurement on the first apparatus during or after an inventory process of the first apparatus; and
a sending module, configured to send first configuration information to the first apparatus, where the first configuration information includes configuration information of a positioning reference signal of the first apparatus.

Based on the thirteenth aspect or the fourteenth aspect, in a possible implementation, the inventory request further includes at least one of the following: second information, third information, recommended configuration information, or fourth information, where the second information indicates a positioning manner of performing positioning measurement on the first apparatus, and the positioning manner includes performing positioning measurement on the first apparatus based on a positioning reference signal sent by the first apparatus, or performing positioning measurement on the first apparatus based on an EPC sent by the first apparatus; the third information indicates to perform positioning measurement on the first apparatus during the inventory process, or perform positioning measurement on the first apparatus after the inventory process; the recommended configuration information includes positioning reference signal configuration information recommended by the core network device; and the fourth information indicates a measurement quantity type of positioning measurement performed on the first apparatus.

Based on the thirteenth aspect or the fourteenth aspect, in a possible implementation, the sending module is further configured to send an inventory command to the first apparatus, where the inventory command is used for inventory of the first apparatus; the receiving module is further configured to receive a first random number from the first apparatus; and the sending module is further configured to send first ACK to the first apparatus, where the first ACK indicates that the communication apparatus successfully receives the first random number.

Based on the thirteenth aspect or the fourteenth aspect, in a possible implementation, the first ACK includes at least one of the following: a quantity of times of sending the positioning reference signal of the first apparatus or frequency domain information of the positioning reference signal, or the first ACK includes at least one of the following: a quantity of times of sending the EPC of the first apparatus or frequency domain information of the EPC.

Based on the thirteenth aspect or the fourteenth aspect, in a possible implementation, the first ACK further includes fifth information, and the fifth information indicates the first apparatus to send the positioning reference signal after the EPC is sent; or the first ACK further includes sixth information, and the sixth information indicates that the EPC sent by the first apparatus is used to perform positioning measurement on the first apparatus.

Based on the thirteenth aspect, in a possible implementation, the processing module is specifically configured to: receive the positioning reference signal from the first apparatus; and measure the positioning reference signal, to obtain a first measurement result.

Based on the fourteenth aspect, in a possible implementation, the receiving module is further configured to receive the positioning reference signal from the first apparatus; the communication apparatus further includes a processing module; and the processing module is configured to measure the positioning reference signal, to obtain a first measurement result.

Based on the thirteenth aspect or the fourteenth aspect, in a possible implementation, the communication apparatus includes the sending module, and the sending module is further configured to send the first measurement result to the core network device.

Based on the thirteenth aspect, in a possible implementation, the processing module is specifically configured to: receive the EPC sent by the first apparatus; and measure the EPC to obtain a second measurement result.

Based on the fourteenth aspect, in a possible implementation, the receiving module is further configured to receive the EPC sent by the first apparatus; the communication apparatus further includes a processing module; and the processing module is configured to measure the EPC to obtain a second measurement result.

Based on the thirteenth aspect or the fourteenth aspect, in a possible implementation, the communication apparatus includes the sending module, and the sending module is further configured to send the second measurement result to the core network device.

Based on the thirteenth aspect or the fourteenth aspect, in a possible implementation, the frequency domain information of the positioning reference signal or the EPC of the first apparatus includes a first frequency domain offset, and the first frequency domain offset is an offset of a frequency domain position, occupied by the positioning reference signal or the EPC of the first apparatus, relative to a carrier center frequency.

Based on the thirteenth aspect or the fourteenth aspect, in a possible implementation, the sending module is further configured to send an inventory command to a second apparatus, where the inventory command is further used for inventory of the second apparatus; the receiving module is further configured to receive a second random number from the second apparatus; and the sending module is further configured to send second ACK to the second apparatus, where the second ACK indicates that the communication apparatus successfully receives the second random number, the second ACK includes frequency domain information of a positioning reference signal or an EPC of the second apparatus, the frequency domain information includes a second frequency domain offset, the second frequency domain offset is an offset of a frequency domain position, occupied by the positioning reference signal or the EPC of the second apparatus, relative to a carrier center frequency, and the first frequency domain offset is different from the second frequency domain offset.

Based on the thirteenth aspect, in a possible implementation, the receiving module is further configured to: receive a first excitation request from the core network device, where the first excitation request includes seventh information, and the seventh information indicates the communication apparatus to excite the first apparatus and the second apparatus to separately send a positioning reference signal or an EPC; and the processing module is specifically configured to: send an excitation signal, where the excitation signal is used to excite the first apparatus and the second apparatus to send a positioning reference signal or an EPC; receive the positioning reference signal or the EPC sent by the first apparatus; measure the positioning reference signal or the EPC from the first apparatus, to obtain a third measurement result; receive the positioning reference signal or the EPC sent by the second apparatus; and measure the positioning reference signal or the EPC from the second apparatus, to obtain a fourth measurement result.

Based on the thirteenth aspect, in a possible implementation, the sending module is further configured to send the third measurement result and the fourth measurement result to the core network device.

Based on the fourteenth aspect, in a possible implementation, the receiving module is further configured to receive a first excitation request from the core network device, where the first excitation request includes seventh information, and the seventh information indicates the communication apparatus to excite the first apparatus and the second apparatus to separately send a positioning reference signal or an EPC; and the sending module is further configured to send an excitation signal, where the excitation signal is used to excite the first apparatus and the second apparatus to send a positioning reference signal or an EPC.

Based on the thirteenth aspect or the fourteenth aspect, in a possible implementation, the first excitation request further includes EPCs respectively corresponding to a plurality of apparatuses in a first group, the first group includes the first apparatus and the second apparatus, and the seventh information indicates the communication apparatus device to excite the plurality of apparatuses in the first group to send a positioning reference signal or an EPC.

Based on the thirteenth aspect, in a possible implementation, the receiving module is further configured to receive a second excitation request from the core network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the communication apparatus to excite, based on the excitation time sequences respectively corresponding to the plurality of apparatuses, the plurality of apparatuses in the first group to send a positioning reference signal or an EPC; and the processing module is specifically configured to: separately excite, based on the excitation time sequences respectively corresponding to the plurality of apparatuses, the plurality of apparatuses in the first group to send a positioning reference signal or an EPC; receive the positioning reference signals or the EPCs sent by the plurality of apparatuses in the first group; and separately measure the positioning reference signals or the EPCs from the plurality of apparatuses, to obtain corresponding measurement results.

Based on the thirteenth aspect, in a possible implementation, the method further includes: The first network device sends to the core network device, the measurement results obtained by measuring the positioning reference signals or EPCs sent by the plurality of apparatuses.

Based on the fourteenth aspect, in a possible implementation, the receiving module is further configured to receive a second excitation request from the core network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signal or an EPC; the communication apparatus further includes a processing module; and the processing module is configured to separately excite, based on the excitation time sequences corresponding to the plurality of apparatuses, the apparatuses in the first group to send the positioning reference signal or the EPC.

Based on the fourteenth aspect, in a possible implementation, the sending module is further configured to send first configuration information to the core network device, where the first configuration information includes configuration information of the positioning reference signal of the first apparatus.

A fifteenth aspect of this application provides a communication apparatus, including:
a processing module, configured to determine an inventory request, where the inventory request is used to request inventory of a first apparatus, the inventory request includes first information, and the first information indicates a first network device to perform positioning measurement on the first apparatus; and
a sending module, configured to send the inventory request to the first network device.

A sixteenth aspect of this application provides a communication apparatus, including:
a sending module, configured to send an inventory request to a first network device, where the inventory request is used to request inventory of a first apparatus, the inventory request includes first information, and the first information indicates the first network device to perform positioning measurement on the first apparatus during or after an inventory process of the first apparatus; and
a receiving module, configured to receive first configuration information from the first network device, where the first configuration information includes configuration information of a positioning reference signal of the first apparatus.

Based on the fifteenth aspect or the sixteenth aspect, in a possible implementation, the inventory request further includes at least one of the following: second information, third information, recommended configuration information, or fourth information, where the second information indicates a positioning manner of performing positioning measurement on the first apparatus, and the positioning manner includes performing positioning measurement on the first apparatus based on a positioning reference signal sent by the first apparatus, or performing positioning measurement on the first apparatus based on an EPC sent by the first apparatus; the third information indicates to perform positioning measurement on the first apparatus during the inventory process, or perform positioning measurement on the first apparatus after the inventory process; the recommended configuration information includes positioning reference signal configuration information recommended by the communication apparatus; and the fourth information indicates a measurement quantity type of positioning measurement performed on the first apparatus.

Based on the fifteenth aspect or the sixteenth aspect, in a possible implementation, the communication apparatus includes the receiving module; the receiving module is configured to receive a first measurement result from the first network device, where the first measurement result is obtained by the first network device by measuring the positioning reference signal sent by the first apparatus; and the communication apparatus includes the processing module, and the processing module is configured to perform positioning on the first apparatus based on the first measurement result.

Based on the fifteenth aspect or the sixteenth aspect, in a possible implementation, the communication apparatus includes the receiving module; the receiving module is configured to receive a second measurement result from the first network device, where the second measurement result is obtained by the first network device by measuring the EPC sent by the first apparatus; and the communication apparatus includes the processing module, and the processing module is configured to perform positioning on the first apparatus based on the second measurement result.

Based on the fifteenth aspect or the sixteenth aspect, in a possible implementation, the sending module is further configured to send a first excitation request to the first network device, where the first excitation request includes seventh information, and the seventh information indicates the first network device to excite the first apparatus and a second apparatus to send a positioning reference signal or an EPC.

Based on the fifteenth aspect or the sixteenth aspect, in a possible implementation, the receiving module is further configured to receive a third measurement result and a fourth measurement result from the first network device, where the third measurement result is obtained by the first network device by measuring the positioning reference signal or the EPC sent by the first apparatus, and the fourth measurement result is obtained by the first network device by measuring the positioning reference signal or the EPC sent by the second apparatus; and the processing module is further configured to: perform positioning on the first apparatus based on the third measurement result, and perform positioning on the second apparatus based on the fourth measurement result.

Based on the fifteenth aspect or the sixteenth aspect, in a possible implementation, the first excitation request further includes EPCs respectively corresponding to a plurality of apparatuses in a first group, the first group includes the first apparatus and the second apparatus, and the seventh information indicates the first network device to excite the plurality of apparatuses in the first group to send a positioning reference signal or an EPC.

Based on the fifteenth aspect or the sixteenth aspect, in a possible implementation, the sending module is further configured to send a second excitation request to the first network device, where the second excitation request includes eighth information, EPCs of a plurality of apparatuses in a first group, and ninth information, the first group includes the first apparatus, the ninth information indicates excitation time sequences respectively corresponding to the plurality of apparatuses in the first group, and the eighth information indicates the first network device to excite, based on the excitation time sequences respectively corresponding to the plurality of apparatuses, the plurality of apparatuses in the first group to send a positioning reference signal or an EPC.

Based on the fifteenth aspect or the sixteenth aspect, in a possible implementation, the receiving module is further configured to receive, from the first network device, measurement results obtained by measuring the positioning reference signals or the EPCs sent by the plurality of apparatuses in the first group; and the processing module is further configured to separately perform positioning on the plurality of apparatuses based on the measurement results.

A seventeenth aspect of this application provides a first apparatus. The first apparatus includes a processor. The processor is configured to invoke a computer program or computer instructions in a storage, so that the processor is configured to perform any implementation of the third aspect or the fourth aspect.

Optionally, the first apparatus further includes a transceiver. The processor is configured to control the transceiver to perform any implementation of the third aspect or the fourth aspect.

Optionally, the processor is integrated with the storage.

An eighteenth aspect of this application provides a communication apparatus. The communication apparatus includes a processor. The processor is configured to invoke a computer program or computer instructions in a storage, so that the processor implements any one of the implementations of the fifth aspect to the eighth aspect.

Optionally, the communication apparatus further includes a transceiver. The processor is configured to control the transceiver to perform any one of the implementations of the fifth aspect to the eighth aspect.

Optionally, the communication apparatus includes the storage. The processor is integrated with the storage.

A nineteenth aspect of this application provides a computer program product including computer instructions. When the computer program product is run on a computer, the computer is enabled to perform any one of the implementations of the first aspect to the tenth aspect.

A twentieth aspect of this application provides a computer-readable storage medium, including computer instructions. When the computer instructions are run on a computer, the computer is enabled to perform any one of the implementations of the first aspect to the tenth aspect.

A twenty-first aspect of this application provides a chip apparatus, including a processor, configured to invoke a computer program or computer instructions in a storage, to enable the processor to perform any one of the implementations of the first aspect to the tenth aspect.

Optionally, the processor is coupled to the storage through an interface.

A twenty-second aspect of this application provides a communication system. The communication system includes the first apparatus shown in the eleventh aspect, the communication apparatus shown in the thirteenth aspect, and the communication apparatus shown in the fifteenth aspect; or
the communication system includes the first apparatus shown in the eleventh aspect, the communication apparatus shown in the fourteenth aspect, and the communication apparatus shown in the sixteenth aspect; or
the communication system includes the first apparatus shown in the twelfth aspect, the communication apparatus shown in the thirteenth aspect, and the communication apparatus shown in the fifteenth aspect; or
the communication system includes the first apparatus shown in the twelfth aspect, the communication apparatus shown in the fourteenth aspect, and the communication apparatus shown in the sixteenth aspect.

According to the foregoing technical solutions, it can be learned that embodiments of this application have the following advantages:

It can be learned from the foregoing technical solutions that the core network device sends the inventory request to the first network device. The inventory request is used to request inventory of the first apparatus. The inventory request includes the first information, and the first information indicates the first network device to perform positioning measurement on the first apparatus. Correspondingly, the first network device receives the inventory request from the core network device, and the first network device performs positioning measurement on the first apparatus during or after the inventory process of the first apparatus, thereby meeting a positioning requirement during or after the inventory process. In another aspect, the core network device includes the first information in the inventory request. Therefore, existing signaling is reused, and signaling overheads are reduced.

### BRIEF DESCRIPTION OF DRAWINGS

FIG. 1 is a diagram of a communication system according to an embodiment of this application;
FIG. 2 is a schematic flowchart of inventorying a tag terminal by a reader according to an embodiment of this application;
FIG. 3 is a diagram of a first embodiment of a positioning measurement method according to an embodiment of this application;
FIG. 4A and FIG. 4B are a diagram of a second embodiment of a positioning measurement method according to an embodiment of this application;
FIG. 5A and FIG. 5B are a diagram of a third embodiment of a positioning measurement method according to an embodiment of this application;
FIG. 6 is a diagram of a structure of a first apparatus according to an embodiment of this application;
FIG. 7 is a diagram of a structure of a communication apparatus according to an embodiment of this application;
FIG. 8 is a diagram of another structure of a communication apparatus according to an embodiment of this application;
FIG. 9 is a diagram of still another structure of a communication apparatus according to an embodiment of this application;
FIG. 10 is a diagram of another structure of a first apparatus according to an embodiment of this application;
FIG. 11 is a diagram of yet another structure of a communication apparatus according to an embodiment of this application; and
FIG. 12 is a diagram of still yet another structure of a communication apparatus according to an embodiment of this application.

### DESCRIPTION OF EMBODIMENTS

This application provides a positioning measurement method, an inventory method, and a related apparatus, so that a first network device performs positioning measurement on a first apparatus during or after an inventory process of the first apparatus, thereby meeting a positioning requirement during or after the inventory process of the first apparatus.

Technical solutions in embodiments of this application are clearly and completely described below with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

The term "and/or" in this application may describe only an association relationship for describing associated objects and represent that three relationships may exist. For example, A and/or B may represent the following three cases: Only A exists, both A and B exist, and only B exists. In addition, the character "/" in this application generally indicates an "or" relationship between the associated objects.

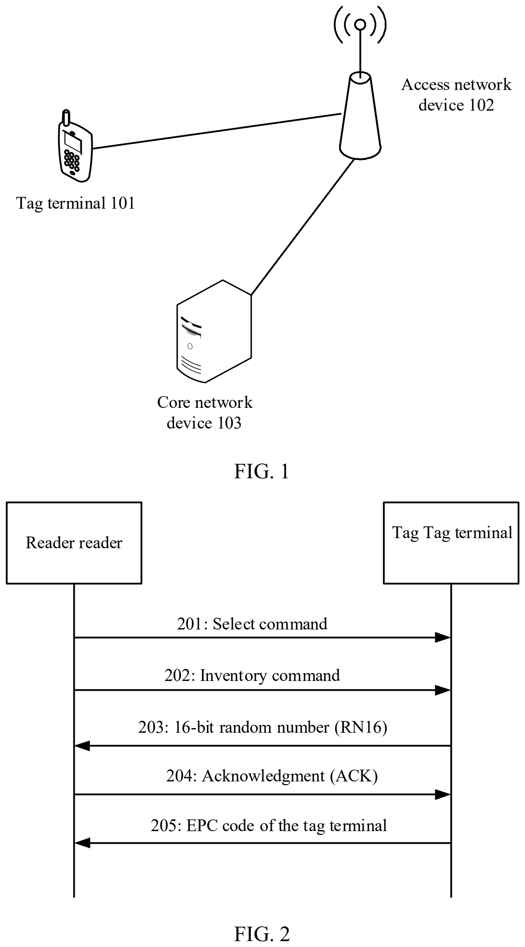

FIG. 1 is a diagram of a communication system according to an embodiment of this application. The communication system includes a tag terminal 101, an access network device 102, and a core network device 103.

A reader (reader) is integrated in the access network device 102. The access network device 102 supports communication with the tag terminal 101. Functions of the core network device 103 include at least one of the following: management and control on the tag terminal 101, or positioning calculation and management on the tag terminal 101. For example, the core network device 103 is a tag management function (tag management function, TMF), or a location management function (location management function, LMF), or a TMF/LMF. The TMF/LMF is a device capable of performing management, control, and positioning calculation on the tag terminal 101.

FIG. 1 shows only an example in which the communication system includes the access network device 102. In actual application, the communication system may further include more access network devices. This is not specifically limited in this application.

In this application, the TMF and the LMF are names shown in a current communication system. In a future communication system, the names of the TMF and the LMF may change with evolution of the communication system. In the current communication system or the future communication system, a function network element having another name and having a function similar to those/that of the TMF and/or the LMF may be understood as a core network device in this application, and is applicable to the communication method provided in this application.

A communication system provided in this application includes a first network device, a core network device, and a first apparatus. Optionally, the communication system further includes a second apparatus.

First, the first apparatus in this application is described.

The first apparatus is an apparatus with a low capability. For example, the first apparatus cannot implement a complex signal processing algorithm, and the first apparatus cannot generate a sequence used to generate a positioning reference signal.

The first apparatus has a reading capability. Specifically, the first apparatus can read corresponding data or information from a memory address of the first apparatus. The first apparatus may be excited to send a signal. For example, the first apparatus is excited to send a positioning reference signal or an EPC.

Optionally, the first apparatus further has at least one of the following capabilities: a write capability, a counting capability, a timing capability, or a capability of actively sending a signal. The write capability means that the first apparatus supports writing of data or information, that is, the first apparatus can write data or information into a memory of the first apparatus. The counting capability means that the first apparatus can perform counting. The timing capability means that the first apparatus can perform timing. The capability of actively sending the signal means that the first apparatus can actively generate a corresponding carrier for sending the signal.

Optionally, the first apparatus is a tag terminal. For example, the first apparatus is a terminal with a chip or an integrated circuit. Alternatively, the first apparatus is an apparatus integrated into a terminal device. Several classifications of a tag terminal are described below. Optionally, the tag terminal includes a passive tag terminal, a semi-passive tag terminal, or an active tag terminal.

The passive tag terminal provides energy for the passive tag terminal by receiving a signal. For example, the passive tag terminal receives an electromagnetic wave, and converts the electromagnetic wave into electric energy, to provide the energy for a passive tag. The passive tag terminal does not support amplifying a transmit signal and supports power consumption at a level of µW (microwatt). The passive tag terminal cannot actively send a signal, and can send a signal only after being excited. In other words, the passive tag terminal cannot actively generate a carrier for carrying a to-be-sent signal.

The semi-passive tag terminal supports solar energy and the like in providing energy for the semi-passive tag terminal. The semi-passive tag terminal supports amplifying a transmit signal and supports power consumption at a level of hundreds of microwatts. For example, the semi-passive tag terminal supports power consumption at a level of 100 µW. The semi-passive tag terminal cannot actively send a signal, and can send a signal only after being excited. In other words, the semi-passive tag terminal cannot actively generate a carrier for carrying a to-be-sent signal.

The active tag terminal supports solar energy, a battery, and the like in providing energy for the active tag terminal. The active tag terminal supports amplifying a transmit signal and supports power consumption at a level of hundreds of microwatts. For example, the active tag terminal supports power consumption at a level of 500 µW, and can actively send a signal. In other words, the active tag terminal can actively generate a carrier for carrying a to-be-sent signal.

In this application, the first apparatus may be the passive tag terminal, the semi-passive tag terminal, or the active tag terminal. This is not specifically limited in this application.

In this application, the first apparatus includes a handheld device, user equipment (user equipment, UE), a mobile station (mobile station, MS), a mobile terminal (mobile terminal, MT), a tag terminal, customer premises equipment (customer premise equipment, CPE), an in-vehicle device, a wearable device (for example, a band or a watch), or the like that has a wireless communication function. Some examples of the first apparatus are a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in telemedicine, a wireless terminal in a smart grid (smart grid), a wireless terminal in transportation safety (transportation safety), a wireless terminal in a smart city (smart city), or a wireless terminal in a smart home (smart home). Alternatively, the first apparatus is a device or an apparatus with a chip, or the first apparatus is a device or an apparatus integrated with a circuit. Alternatively, the first apparatus is a component (for example, a chip), a module, or a unit in the device. This is not specifically limited in this application. For example, the first apparatus is a module or a unit in the device shown above.

In this application, the second apparatus is similar to the first apparatus. For details, refer to the foregoing related descriptions of the first apparatus.

A first network device in this application is described below.

The first network device is a reader (reader), or the first network device is a network device that integrates the reader. The first network device may communicate with the first apparatus. For example, the first network device has an inventory function and an excitation function. That is, the first network device supports inventory of the first apparatus. For a specific inventory procedure, refer to the related descriptions of a procedure shown in FIG. 2. The first network device supports excitation of the first apparatus to send a signal. The first network device further has a function of reading data or information of the first apparatus and a function of supporting writing data or information into the first apparatus. For example, the first network device writes configuration information of a positioning reference signal into the first apparatus.

Optionally, the first network device is a device in a wireless network. For example, the first network device is a device that is deployed in a radio access network and that provides a wireless communication function for the first apparatus. For example, the first network device may be an access network (radio access network, RAN) node that enables the first apparatus to access the wireless network, and may also be referred to as an access network device, a RAN entity, an access node, a network node, or a communication apparatus.

Specifically, the first network device may be an access network device of a cellular system related to the 3rd generation partnership project (3rd generation partnership project, 3GPP), for example, a 4th generation (fourth-generation, 4G) mobile communication system or a 5th generation (fifth-generation, 5G) mobile communication system. Alternatively, the network device may be an access network device in an open radio access network (open RAN, O-RAN, or ORAN) or a cloud radio access network (cloud radio access network, CRAN). Alternatively, the first network device may be an access network device in a communication system obtained by integrating the foregoing two or more communication systems.

The first network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a radio relay node, a donor node, a radio controller in a CRAN scenario, a wireless backhaul node, a transmission point (transmission point, TP), a transmission reception point (transmission and receiving point, TRP), or the like. Alternatively, the first network device may be a network device in a 5G mobile communication system, for example, a next generation NodeB (next generation NodeB, gNB), a TRP, or a TP in a new radio (new radio, NR) system, or one or one group of antenna panels (including a plurality of antenna panels) of a base station in a 5G mobile communication system. Alternatively, the first network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna processing unit (active antenna unit, AAU), or a remote radio head (remote radio head, RRH). Alternatively, the first network device may be a server, a wearable device, a vehicle, an in-vehicle device, or the like. For example, an access network device in a V2X technology may be a road side unit (road side unit, RSU).

It should be noted that in different systems, the CU (or the CU-CP and the CU-UP), the DU, or the RU may have different names, but persons skilled in the art may understand meanings of the names. For example, in the ORAN system, the CU may also be referred to as an O-CU or an open CU, the DU may also be referred to as an O-DU, the CU-CP may also be referred to as an O-CU-CP, the CU-UP may also be referred to as an O-CU-UP, and the RU may also be referred to as an O-RU. This is not specifically limited in this application. Any one of the CU, the CU-CP, the CU-UP, the DU, and the RU in this application may be implemented by using a software module, a hardware module, or a combination of the software module and the hardware module.

Optionally, for the network elements in the ORAN system, each network element may implement a protocol layer function shown in Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (medium access control, MAC), and physical higher layer (PHY-high) |
| O-RU | Physical lower layer (PHY-low) |

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on a protocol layer function of a wireless network implemented by the CU and the DU. For example, the CU is configured to implement functions of a packet data convergence protocol (packet data convergence protocol, PDCP) layer and a protocol layer above the PDCP layer (for example, an RRC layer and/or an SDAP layer). The DU is configured to implement a function of a protocol layer below the PDCP layer (for example, an RLC layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element configured to implement the control plane function in the core network may be an access and mobility function network element, for example, an access and mobility function (access and mobility management function, AMF) in a 5G mobile communication system. The access and mobility function network element is configured to be responsible for mobility management in a mobile network, for example, position update of a terminal device, network registration of the terminal device, and handover of the terminal device. The CU-UP may interact with a network element configured to implement a user plane function in the core network. The network element configured to implement the user plane function in the core network, for example, a user function (User Plane Function, UPF) in a 5G mobile communication system, is configured to be responsible for forwarding and receiving data in a terminal device.

The foregoing configurations of the CU and the DU are merely examples. Alternatively, functions of the CU and the DU may be configured as required. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be obtained through division based on a service type or another system requirement. For example, division is performed based on a latency. In this case, functions whose processing time needs to satisfy a small latency requirement are disposed on the DU, and functions whose processing time does not need to satisfy the latency requirement are disposed on the CU.

The DU and the RU may work together to implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions is closer to the MAC layer. The lower-layer functions of the physical layer may include another part of functions of the physical layer, and the part of functions is closer to an intermediate radio frequency side.

It should be noted that the first network device may be the foregoing device or apparatus, or may be a component (for example, a chip), a module, or a unit in the foregoing device or apparatus. This is not specifically limited in this application.

It should be noted that the foregoing shows an implementation in which the first network device is an access network device. In actual application, the first network device may alternatively be another network device. For example, the first network device is a core network device, and a reader is integrated into the core network device.

The core network device is configured to perform positioning calculation and management on a position of a first apparatus, and/or manage and control the first apparatus. For example, the core network device is an LMF, a TMF, or the TMF/LMF, or may be a newly defined network element. This is not specifically limited in this application.

In this application, an EPC of the first apparatus uniquely identifies the first apparatus. When the first apparatus is inventoried, the first apparatus is distinguished from another apparatus by using the EPC of the first apparatus. For example, the first apparatus is a tag terminal, and the EPC of the tag terminal is used to distinguish the tag terminal from another tag terminal when the tag terminal is inventoried. Optionally, the EPC of the first apparatus may be 64 bits, 96 bits, or 256 bits. This is not specifically limited in this application. Each bit is a bit.

A procedure in which a reader inventories a tag terminal is described below with reference to an embodiment shown in FIG. 2. Refer to FIG. 2, the inventory procedure includes the following steps.

201: The reader sends a select command. The select command includes a mask of a tag terminal selected by the reader.

Specifically, the reader broadcasts the select command. After receiving the select command, the tag terminal determines whether a mask carried in the select command includes the mask of the tag terminal, and if the mask includes the mask of the tag terminal, it indicates that the tag terminal is selected. The tag terminal changes an inventory flag of the tag terminal. For example, the tag terminal may set the inventory flag of the tag terminal to 0.

202: The reader sends an inventory (Query) command, to negotiate a data rate, a coding mode, and the like for inventorying. After the tag terminal receives the inventory command, the tag terminal resets a slot counter of the tag terminal, and specifically resets the slot counter to a random number.

After step 202, each time the tag terminal receives an inventory command sent by the reader, a count value of the slot counter is decreased by 1. When the count value of the slot counter is equal to 0, the following step 203 is performed.

203: The tag terminal sends a 16-bit random number (random number 16, RN16) to the reader.

204: After the reader receives the RN16, the reader sends acknowledgment (acknowledge character, ACK) to the tag terminal.

205: The tag terminal sends an EPC of the tag terminal to the reader.

Correspondingly, the reader reads the EPC. In this case, the tag terminal exits the current inventory procedure, and waits for being selected next time.

The tag terminal has a weak signal processing capability, and therefore cannot implement a complex signal processing algorithm. Consequently, a positioning capability of the tag terminal is limited, and a conventional positioning method cannot be directly applied to the tag terminal. For example, the tag terminal cannot perform downlink positioning measurement. In this case, how to perform positioning on the tag terminal to meet a positioning requirement is an urgent problem to be resolved.

In another aspect, a procedure of the conventional positioning method is complex, and a large amount of information needs to be exchanged to obtain a positioning measurement quantity, so as to determine a position of a user. In addition, the inventory process shown in FIG. 2 does not support obtaining of positioning information. Therefore, positioning is not supported during or after the inventory process. A positioning requirement during or after the inventory process cannot be supported. This application provides corresponding technical solutions. For details, refer to the related descriptions in the following embodiments.

The technical solutions of this application are described below with reference to specific embodiments.

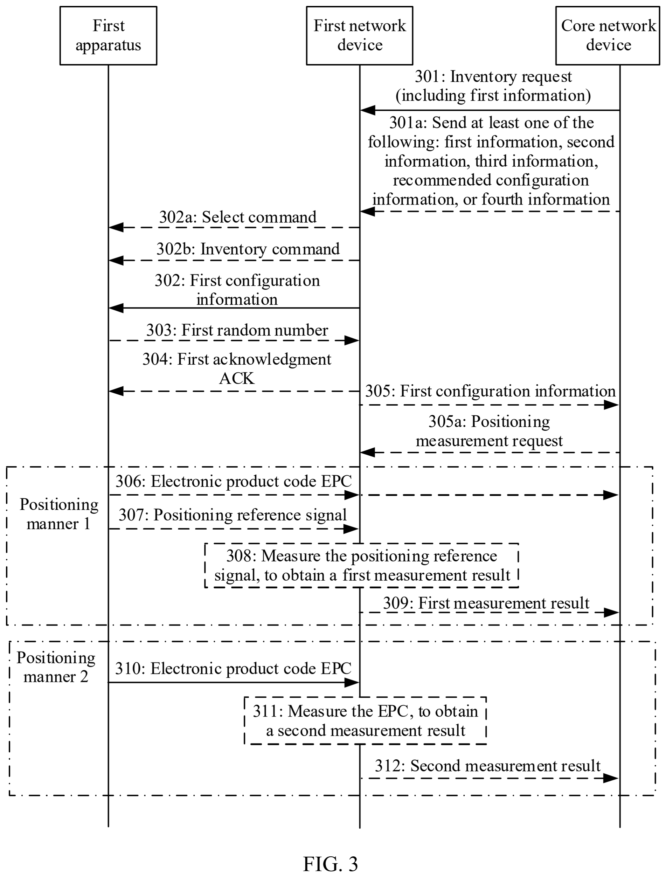

FIG. 3 is a diagram of a first embodiment of a positioning measurement method according to an embodiment of this application. Refer to FIG. 3. The method includes the following steps.

301: A core network device sends an inventory request (Query request) to a first network device. The inventory request includes first information. Correspondingly, the first network device receives the inventory request from the core network device.

The inventory request is used to request inventory of a first apparatus. The first information indicates the first network device to perform positioning measurement on the first apparatus during or after an inventory process of the first apparatus. In the foregoing step 301, the core network device does not inventory an apparatus. Therefore, the core network device cannot learn of which apparatuses can be positioned. In other words, the inventory request may indicate the first network device to perform positioning measurement on an inventoried apparatus. For example, the first information is indication information, and the indication information indicates the first network device to perform positioning measurement on an inventoried tag terminal.

Optionally, the embodiment shown in FIG. 3 further includes step 301a.

301a: The first network device further sends the first apparatus at least one of the following: second information, third information, recommended configuration information, or fourth information.

The second information indicates a positioning manner for performing positioning measurement on the first apparatus. The positioning manner includes performing positioning measurement on the first apparatus based on a positioning reference signal sent by the first apparatus, or performing positioning measurement on the first apparatus based on an EPC sent by the first apparatus. For example, the second information is indication information. If a value of the indication information is 0, it indicates to perform positioning measurement on the first apparatus based on the positioning reference signal sent by the first apparatus. If the value of the indication information is 1, it indicates to perform positioning measurement on the first apparatus based on the EPC sent by the first apparatus.

The third information indicates to perform positioning measurement on the first apparatus during the inventory process, or perform positioning measurement on the first apparatus after the inventory process. In other words, the third information indicates a positioning order for positioning the first apparatus. The positioning order includes performing positioning measurement during the inventory process, or performing positioning measurement after the inventory process. For example, the third information is indication information. If a value of the indication information is 0, it indicates to perform positioning measurement on the first apparatus during the inventory process, that is, perform positioning measurement on the first apparatus based on the EPC sent by the first apparatus. If a value of the indication information is 1, it indicates to perform positioning measurement on the first apparatus after the inventory process, that is, perform positioning measurement on the first apparatus based on the positioning reference signal sent by the first apparatus.

The recommended configuration information includes positioning reference signal configuration information recommended by the core network device. For example, the recommended configuration information includes at least one of the following: sequence information of the positioning reference signal, frequency domain information of the positioning reference signal, or a quantity of times of sending the positioning reference signal. For example, the sequence information of the positioning reference signal includes a sequence of the positioning reference signal or an identifier of the sequence. The frequency domain information of the positioning reference signal includes a frequency domain position occupied by the positioning reference signal.

Optionally, the core network device may determine the recommended configuration information with reference to a capability of the first apparatus and/or frequency domain information used by the first network device. Therefore, the first network device determines the configuration information of the positioning reference signal for the first apparatus. For example, the first apparatus has a counting capability. Therefore, the core network device may recommend that the first apparatus send the positioning reference signal for a plurality of times. This helps improve positioning precision.

The fourth information indicates a measurement quantity type of positioning measurement performed on the first apparatus. In other words, the fourth information indicates a measurement quantity type of positioning measurement performed on the inventoried apparatus.

Optionally, at least one piece of the second information, the third information, the recommended configuration information, and the fourth information is carried in the inventory request. For example, the second information and the third information are carried in the inventory request, and the core network device sends the recommended configuration information and the fourth information to the first network device by using independent signaling.

It should be noted that there is no fixed execution order between step 301 and step 301a. Step 301 may be performed before step 301a, or step 301a is performed before step 301, or step 301 and step 301a are simultaneously performed based on a case. This is not specifically limited in this application.

302: The first network device sends first configuration information to the first apparatus. Correspondingly, the first apparatus receives the first configuration information from the first network device.

The first configuration information includes configuration information of a positioning reference signal of the first apparatus.

In a possible implementation, the first configuration information includes sequence information used to generate a positioning reference signal. For example, the first configuration information includes a sequence used to generate the positioning reference signal. Alternatively, the first configuration information includes an identifier of a sequence used to generate the positioning reference signal. Specifically, a plurality of sequences may be preconfigured in the first apparatus. Then, the first apparatus may determine, from the plurality of sequences based on the identifier, the sequence used to generate the positioning reference signal.

In this implementation, if positioning measurement is performed on the first apparatus based on the positioning reference signal sent by the first apparatus, but the first apparatus does not have a capability of a complex signal processing algorithm (for example, the first apparatus cannot independently generate a sequence), the first network device may configure, for the first apparatus, the sequence used to generate the positioning reference signal. This facilitates the first apparatus generating the positioning reference signal based on the sequence.

Optionally, in this implementation, the first configuration information further includes at least one of the following: frequency domain information of the positioning reference signal, or a quantity of times of sending the positioning reference signal.

In another possible implementation, the first configuration information includes frequency domain information of the EPC. In this implementation, if positioning measurement is performed on the first apparatus based on the EPC sent by the first apparatus, the first network device may configure the frequency domain information of the EPC for the first apparatus by using the first configuration information. Optionally, the first configuration information further includes a quantity of times of sending the EPC.

Optionally, if the first network device is an access network device that integrates a reader, the access network device directly sends the first configuration information to the first apparatus. If the first network device is an independent reader, the first network device sends the first configuration information to the first apparatus by using an access network device.

It should be noted that optionally, the first configuration information may be common configuration information. For example, the first network device may inventory a plurality of apparatuses. The first configuration information is applicable to the plurality of apparatuses that are inventoried by the first network device. Therefore, the first network device may broadcast the first configuration information. For the plurality of inventoried apparatuses, the first configuration information may be used as common configuration information of positioning reference signals. For example, the first configuration information includes sequence information of the positioning reference signals. That is, the first network device may configure a unified positioning reference signal sequence for the plurality of inventoried apparatuses.

Optionally, the embodiment shown in FIG. 3 further includes step 302a and step 302b and step 303 and step 304.

302a: The first network device sends a select command to the first apparatus. The select command is used to select the first apparatus. Correspondingly, the first apparatus receives the select command from the first network device.

For the select command, refer to the related descriptions in step 201 in the embodiment shown in FIG. 2.

302b: The first network device sends an inventory command to the first apparatus. The inventory command is used for inventory of the first apparatus. Correspondingly, the first apparatus receives the inventory command from the first network device.

Specifically, after receiving the select command in step 302a, the first apparatus determines that the first apparatus is selected. Then, the first apparatus receives the inventory command from the first network device. After the first apparatus receives the inventory command, the first apparatus resets a slot counter of the first apparatus, specifically, may reset the slot counter to a random number. Each time the first apparatus receives a repeated inventory command from the first network device, a count value of the slot counter is decreased by 1. When the count value of the slot counter is equal to 0, the following step 303 is performed.

303: The first apparatus sends a first random number to the first network device. Correspondingly, the first network device receives the first random number from the first apparatus.

Optionally, the first random number is a first RN16. That is, the first random number is a 16-bit random number.

304: The first network device sends first ACK to the first apparatus. Correspondingly, the first apparatus receives the first ACK from the first network device.

The first ACK indicates that the first apparatus successfully receives the first random number.

Optionally, the first ACK includes at least one of the following: the quantity of times of sending the positioning reference signal of the first apparatus, or the frequency domain information of the positioning reference signal of the first apparatus; or the first ACK includes at least one of the following: the quantity of times of sending the EPC of the first apparatus, or the frequency domain information of the EPC of the first apparatus.

Specifically, if positioning measurement is performed on the first apparatus based on the positioning reference signal sent by the first apparatus, the first ACK may include the at least one of the following: the quantity of times of sending the positioning reference signal of the first apparatus, or the frequency domain information of the positioning reference signal of the first apparatus. For example, the frequency domain information of the positioning reference signal of the first apparatus includes a frequency band used by the first apparatus to send the positioning reference signal. If positioning measurement is performed on the first apparatus based on the EPC sent by the first apparatus, the first ACK may include the at least one of the following: the quantity of times of sending the EPC of the first apparatus, or the frequency domain information of the EPC of the first apparatus. For example, the frequency domain information of the EPC of the first apparatus includes a frequency band used by the first apparatus to send the EPC.

It should be noted that optionally, the configuration information of the positioning reference signal carried in the first ACK may be understood as dedicated configuration information of the first apparatus. It can be learned from the foregoing that the first configuration information may be common configuration information. For different apparatuses, the first network device may configure different quantities of sending times and/or different frequency domain information. This helps avoid positioning measurement interference between the different apparatuses, and improve positioning precision. For example, the first network device configures a same positioning reference signal sequence for two apparatuses. The first network device configures different frequency domain information for the two apparatuses. This avoids interference in frequency domain when the two apparatuses send a positioning reference signal or an EPC, and improves positioning precision.

Optionally, the first ACK further includes fifth information, and the fifth information indicates the first apparatus to send the positioning reference signal after the EPC is sent; or the first ACK further includes sixth information, and the sixth information indicates that the EPC sent by the first apparatus is used to perform positioning measurement on the first apparatus. That is, the sixth information indicates to use the EPC sent by the first apparatus as the positioning reference signal, so that positioning measurement is performed on the first apparatus by using the EPC sent by the first apparatus.

It should be noted that the first network device may alternatively send, to the first apparatus by using other signaling, at least one piece of information carried in the first ACK. This is not specifically limited in this application. For example, the first network device sends, to the first apparatus by using the first ACK, the quantity of times of sending the positioning reference signal of the first apparatus and the frequency domain information of the positioning reference signal of the first apparatus, and sends the fifth information to the first apparatus by using independent signaling.

In a possible implementation, a possible format of the first ACK is described below with reference to Table 2.

**Table 2**

| | Command code | Random number (RN) | Indication information | Configuration information |
|---|---|---|---|---|
| Quantity of bits | 2 | 16 | 1 | X |
| Description | 01 | Respond to RN16 | Indicate the first apparatus to send the positioning reference signal after the EPC is sent | Quantity of times of sending the positioning reference signal, and frequency domain information |

X indicates a quantity of bits. A value of X may be determined based on the configuration information that actually needs to be indicated. It can be learned that the first network device configures, for the first apparatus by using the first ACK, the dedicated configuration information of the positioning reference signal. Further, the first network device includes, in the first ACK, information that indicates the first apparatus to send the positioning reference signal after the EPC is sent. This facilitates the first apparatus sending the positioning reference signal after the EPC is sent, and excites the first apparatus to send the positioning reference signal.

In another possible implementation, another possible format of the first ACK is described below with reference to Table 3.

**Table 3**

| | Command code | Random number (RN) | Configuration information |
|---|---|---|---|
| Quantity of bits | 2 | 16 | X |
| Description | 01 | Respond to RN16 | Quantity of times of sending the EPC, and frequency domain information |

X indicates a quantity of bits. A value of X may be determined based on the configuration information that actually needs to be indicated. It can be learned that the first network device configures, for the first apparatus by using the first ACK, the dedicated configuration information of the positioning reference signal. Therefore, the first apparatus sends the EPC based on the dedicated configuration information, so as to perform positioning measurement on the first apparatus.

It can be learned that during an inventory process of the first apparatus, the first network device sends related configuration information of the positioning reference signal to the first apparatus by using the first ACK. This implements positioning measurement on the first apparatus during or after the inventory process of the first apparatus, and reduces signaling overheads. In another aspect, the first network device configures, for the first apparatus by using the first ACK, the dedicated configuration information. This helps avoid a positioning measurement conflict or interference between different apparatuses.

It should be noted that step 302a and step 302b and step 303 and step 304 may be performed before step 302; or step 302a and step 302b and step 303 and step 304 may be performed after step 302; or step 302a and step 302b, step 303 and step 304, and step 302 may be simultaneously performed. This is not specifically limited in this application.

It should be noted that optionally, the first network device may send the first configuration information to the first apparatus by using a separate message. Alternatively, the first configuration information in step 302 is carried in the inventory command in step 302b, or the first configuration information in step 302 may be carried in the first ACK in step 304. This is not specifically limited in this application. This implements positioning on the first apparatus during the inventory process of the first apparatus. In addition, signaling during the inventory process is reused, and signaling overheads are reduced.

Optionally, the embodiment shown in FIG. 3 further includes step 305. Step 305 may be performed after step 302.

305: The first network device sends the first configuration information to the core network device. Correspondingly, the core network device receives the first configuration information from the first network device.

It should be noted that optionally, the first network device further sends, to the core network device, configuration information carried in the first ACK. Therefore, the core network device selects a plurality of TRPs to measure the positioning reference signal or the EPC sent by the first apparatus. The plurality of TRPs can perform positioning measurement, and this improves positioning precision.

It should be noted that there is no fixed execution order between step 305, step 302a and step 302b, and step 303 and step 304. Step 302a and step 302b and step 303 and step 304 may be performed before step 305. Alternatively, step 305 is performed before step 302a and step 302b and step 303 and step 304. Alternatively, step 302a and step 302b, step 303 and step 304, and step 305 are simultaneously performed based on a case.

The positioning process of the first apparatus in this application is separately described below with reference to two positioning manners.

Positioning manner 1: The first network device performs positioning measurement on the first apparatus based on the positioning reference signal sent by the first apparatus.

Optionally, the embodiment shown in FIG. 3 further includes step 306 to step 309. Step 306 to step 309 may be performed after step 304.

306: The first apparatus sends the EPC to the first network device. Correspondingly, the first network device receives the EPC from the first apparatus.

Specifically, after the first apparatus receives the first ACK, the first apparatus may send the EPC to the first network device. Optionally, the first network device may send the EPC to the core network device. This implements inventory of the first apparatus.

307: The first apparatus sends the positioning reference signal to the first network device. Correspondingly, the first network device receives the positioning reference signal from the first apparatus.

The first apparatus determines, based on the first configuration information, a sequence used to generate the positioning reference signal. Then, the first apparatus generates the positioning reference signal based on the sequence. The first apparatus sends the positioning reference signal to the first network device based on the configuration information carried in the first ACK. For example, the first ACK includes the quantity N of times of sending the positioning reference signal and the frequency domain information of the positioning reference signal, where N is an integer greater than or equal to 1. The first apparatus determines, based on the frequency domain information, a frequency domain position used to send the positioning reference signal, and sends the positioning reference signal to the first network device N times at the frequency domain position.

308: The first network device measures the positioning reference signal, to obtain a first measurement result.

The first measurement result includes a measurement quantity obtained by the first network device by measuring the positioning reference signal. Optionally, the first network device measures the positioning reference signal based on the fourth information.

309: The first network device sends the first measurement result to the core network device. Correspondingly, the core network device receives the first measurement result from the first network device.

After the core network device receives the first measurement result, the core network device performs positioning on the first apparatus based on the first measurement result. For example, the core network device determines a position of the first apparatus based on the first measurement result. It should be noted that the technical solution of this application is described herein by using an example in which the core network device has a capability of performing positioning calculation and management on the first apparatus. For example, the core network device is an LMF or a TMF/LMF. If the core network device does not have the capability of performing positioning calculation and management, after the core network device receives the first measurement result, the core network device may send the first measurement result to a positioning device, and then the positioning device performs positioning on the first apparatus based on the first measurement result. Alternatively, the first network device sends the first measurement result to the positioning device, and then the positioning device performs positioning on the first apparatus based on the first measurement result.

Optionally, the first measurement result is carried in a positioning measurement response (positioning measurement request). Correspondingly, optionally, the embodiment shown in FIG. 3 further includes step 305a. Step 305a may be performed before step 307.

305a: The core network device sends a positioning measurement request (positioning measurement response) to the first network device. Correspondingly, the first network device receives the positioning measurement request from the core network device.

The positioning measurement request is used to request the first network device to perform positioning measurement on the first apparatus. In other words, the positioning measurement request is used to request the first network device to measure the positioning reference signal sent by the first apparatus.

Positioning manner 2: The first network device performs positioning measurement on the first apparatus based on the EPC sent by the first apparatus.

Optionally, the embodiment shown in FIG. 3 further includes step 310 to step 312. Step 310 to step 312 may be performed after step 304.

310: The first apparatus sends the EPC to the first network device. Correspondingly, the first network device receives the EPC from the first apparatus.

Optionally, the first apparatus determines, based on the first configuration information, frequency domain information used to send the EPC. Then, the first apparatus determines, based on the frequency domain information of the EPC, a frequency domain position used to send the EPC, and sends the EPC to the first network device at the frequency domain position. Optionally, the first ACK includes the quantity N of times of sending the EPC, where N is an integer greater than or equal to 1. The first apparatus sends the EPC to the first network device N times at the frequency domain position.

Optionally, the first network device further sends the EPC to the core network device. This implements inventory of the first apparatus.

311: The first apparatus measures the EPC, to obtain a second measurement result.

The second measurement result includes a measurement quantity obtained by the first network device by measuring the EPC. Optionally, the first network device measures the EPC based on the fourth information.

312: The first network device sends the second measurement result to the core network device. Correspondingly, the core network device receives the second measurement result from the first network device.

After the core network device receives the second measurement result, the core network device performs positioning on the first apparatus based on the second measurement result. For example, the core network device determines a position of the first apparatus based on the second measurement result. It should be noted that the technical solution of this application is described herein by using an example in which the core network device has a capability of performing positioning calculation and management. For example, the core network device is an LMF or a TMF/LMF. If the core network device does not have the capability of performing positioning calculation and management, after the core network device receives the second measurement result, the core network device may send the second measurement result to a positioning device, and then the positioning device performs positioning on the first apparatus based on the second measurement result. Alternatively, the first network device sends the second measurement result to the positioning device, and then the positioning device performs positioning on the first apparatus based on the second measurement result.

Optionally, the first measurement result is carried in a positioning measurement response. Correspondingly, optionally, the embodiment shown in FIG. 3 further includes step 305a. Step 305a may be performed before step 310.

305a: The core network device sends the positioning measurement request to the first network device. Correspondingly, the first network device receives the positioning measurement request from the core network device.

The positioning measurement request is used to request the first network device to perform positioning measurement on the first apparatus.

In this embodiment of this application, the core network device sends the inventory request to the first network device. The inventory request is used to request inventory of the first apparatus. The inventory request includes the first information, and the first information indicates the first network device to perform positioning measurement on the first apparatus during or after the inventory process of the first apparatus. Correspondingly, the first network device receives the inventory request from the core network device. The first network device sends the first configuration information to the first apparatus, where the first configuration information includes the configuration information of the positioning reference signal of the first apparatus. This facilitates performing positioning measurement on the first apparatus during or after the inventory process of the first apparatus, thereby meeting a positioning requirement during or after the inventory process.

This application further provides another Embodiment A, and this embodiment includes step 1 and step 2.

Step 1: A core network device sends an inventory request to a first network device. Correspondingly, the first network device receives the inventory request from the core network device. Step 1 is similar to step 301 in the embodiment shown in FIG. 3. For details, refer to the related descriptions of step 301 in the embodiment shown in FIG. 3.

Optionally, this embodiment further includes step 1a.

Step 1a: The core network device sends, to the first network device, at least one of the following: first information, second information, third information, recommended configuration information, or fourth information. Step 1a is similar to step 301a in the embodiment shown in FIG. 3. For details, refer to the related descriptions of step 301a in the embodiment shown in FIG. 3.

There is no fixed execution order between step 1 and step 1a. Step 1 may be performed before step 1a; or step 1a may be performed before step 1; or step 1 and step 1a may be simultaneously performed based on a situation. This is not specifically limited in this application.

Step 2: The first network device performs positioning measurement on a first apparatus during or after an inventory process of the first apparatus.

Two possible implementations of step 2 are described below. This application is also applicable to another implementation. This is not specifically limited in this application.

Implementation 1 is described below with reference to step 2.1 and step 2.2. Optionally, step 2 specifically includes step 2.1 and step 2.2.

Step 2.1: The first network device receives a positioning reference signal from the first apparatus.

Step 2.2: The first network device measures a positioning device, to obtain a first measurement result.

Step 2.1 and step 2.2 are similar to step 307 and step 308 in the embodiment shown in FIG. 3. For details, refer to the related descriptions of step 307 and step 308 in the embodiment shown in FIG. 3.

In Implementation 1, optionally, this embodiment further includes step 2.3. Step 2.3 may be performed after step 2.2.

Step 2.3: The first network device sends the first measurement result to the core network device.

Step 2.3 is similar to step 309 in the embodiment shown in FIG. 3. For details, refer to the related descriptions of step 309 in the embodiment shown in FIG. 3.

Implementation 2 is described below with reference to step 2.4 and step 2.5. Optionally, step 2 specifically includes step 2.4 and step 2.5.

Step 2.4: The first network device receives an EPC sent by the first apparatus.

Step 2.5: The first network device measures the EPC, to obtain a second measurement result.

Step 2.4 and step 2.5 are similar to step 310 and step 311 in the embodiment shown in FIG. 3. For details, refer to the related descriptions of step 310 and step 311 in the embodiment shown in FIG. 3.

In Implementation 2, optionally, this embodiment further includes step 2.6. Step 2.6 may be performed after step 2.4.

Step 2.6: The first network device sends the second measurement result to the core network device.

Step 2.6 is similar to step 312 in the embodiment shown in FIG. 3. For details, refer to the related descriptions of step 312 in the embodiment shown in FIG. 3.

Optionally, this embodiment further includes step 2a, and step 2a may be performed before step 2.

Step 2a: The core network device sends a positioning measurement request to the first network device. Step 2a is similar to step 305a in the embodiment shown in FIG. 3. For details, refer to the related descriptions of step 305a in the embodiment shown in FIG. 3.

Optionally, this embodiment further includes step 2b to step 2e. Step 2b to step 2e may be performed before step 2. If this embodiment further includes step 2a, step 2b to step 2e may be performed before step 2a.

Step 2b: The first network device sends a select command to the first apparatus.

Step 2c: The first network device sends an inventory command to the first apparatus.

Step 2d: The first apparatus sends a first random number to the first network device.

Step 2e: The first network device sends first ACK to the first apparatus.

Step 2b to step 2e are similar to step 302a, step 302b, step 303, and step 304 in the embodiment shown in FIG. 3. For details, refer to the related descriptions in the embodiment shown in FIG. 3.

Optionally, this embodiment further includes step 2f. Step 2f can be performed before step 2. If this embodiment further includes step 2a, step 2f may be performed before step 2a.

Step 2f: The first network device sends first configuration information to the first apparatus. Step 2f is similar to step 302 in the embodiment shown in FIG. 3. For details, refer to the related descriptions of step 302 in the embodiment shown in FIG. 3.

It should be noted that if the first apparatus includes preconfigured configuration information of the positioning reference signal, the first network device does not need to configure the first configuration information for the first apparatus.

It should be noted that there is no fixed execution order between step 2f and step 2b to step 2e. Step 2f may be performed before step 2b to step 2e; or step 2b to step 2e are performed before step 2f; or step 2f and the foregoing step 2b to step 2e are simultaneously performed based on a case. This is not specifically limited in this application.

Optionally, this embodiment further includes step 2g. Step 2g may be performed after step 2f. If this embodiment further includes step 2a, step 2g may be performed before step 2a.

Step 2g: The first network device sends the first configuration information to the core network device. Step 2g is similar to step 305 in the embodiment shown in FIG. 3. For details, refer to the related descriptions of step 305 in the embodiment shown in FIG. 3.

In this embodiment, the inventory request includes the first information, and the first information indicates the first network device to perform positioning measurement on the first apparatus during or after the inventory process of the first apparatus, so that the first network device performs positioning measurement on the first apparatus during or after the inventory process of the first apparatus, thereby meeting a positioning requirement. In another aspect, the core network device includes the first information in the inventory request. Therefore, existing signaling is reused, and signaling overheads are reduced.

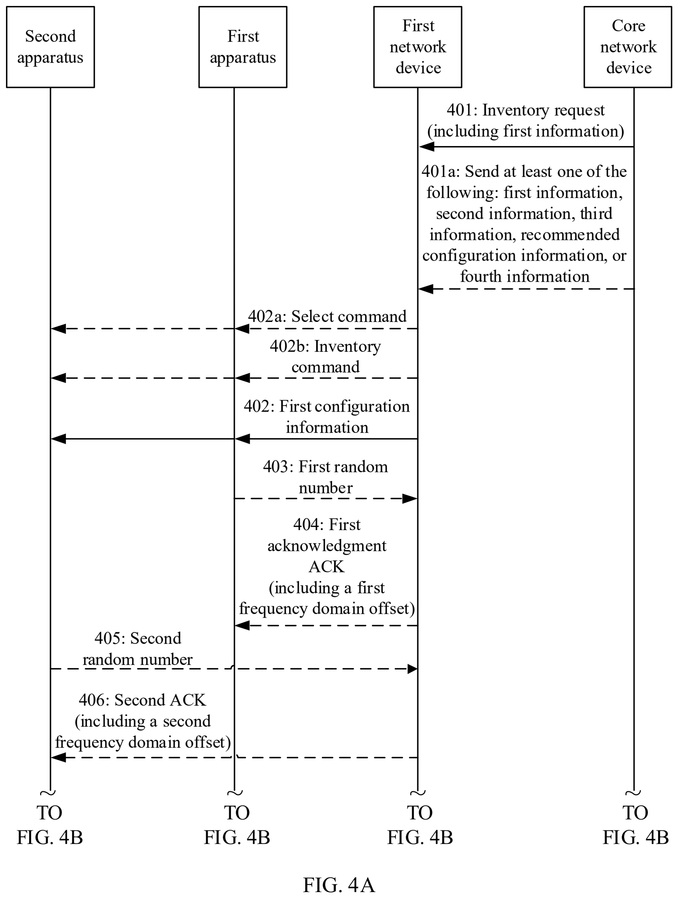

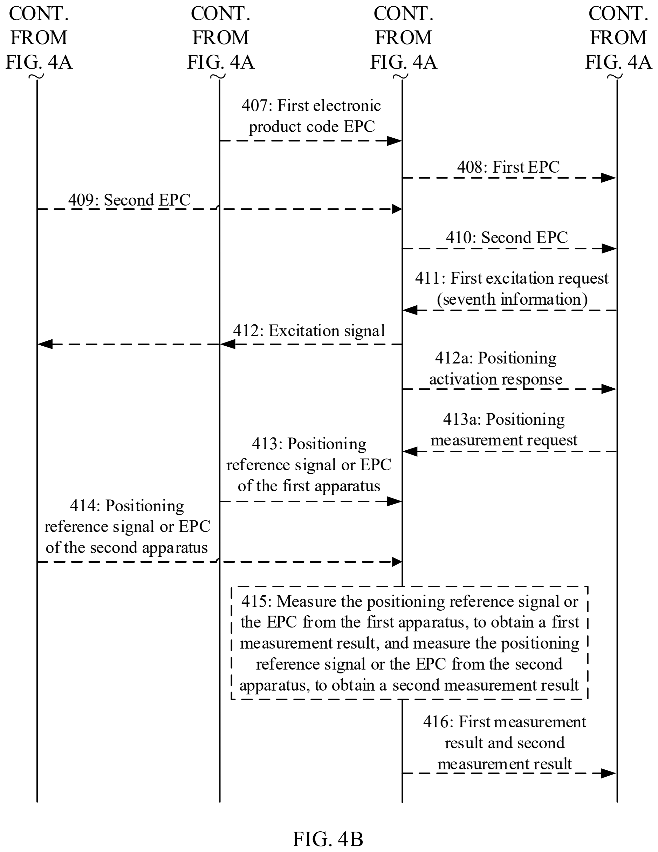

FIG. 4A and FIG. 4B are a diagram of a second embodiment of a positioning measurement method according to an embodiment of this application. Refer to FIG. 4A and FIG. 4B. The method includes the following steps.

401: A core network device sends an inventory request to a first network device. The inventory request includes first information. Correspondingly, the first network device receives the inventory request from the core network device.

The inventory request is used to request inventory of a first apparatus and a second apparatus. The first information indicates the first network device to perform positioning measurement on the first apparatus during or after an inventory process of the first apparatus, and perform positioning measurement on the second apparatus during or after an inventory process of the second apparatus. In the foregoing step 401, the core network device does not inventory an apparatus. Therefore, the core network device cannot learn of which apparatuses can be positioned. In other words, the first information indicates the first network device to perform positioning measurement on an inventoried apparatus. For example, the first information is indication information, and the indication information indicates the first network device to perform positioning measurement on an inventoried tag terminal.

Optionally, the embodiment shown in FIG. 4A and FIG. 4B further includes step 401a.

401a: The core network device sends, to the first network device, at least one of the following: second information, third information, recommended configuration information, or fourth information.

The second information indicates a positioning manner for performing positioning measurement on the first apparatus and the second apparatus. In the foregoing step 401, the core network device does not inventory an apparatus. Therefore, the core network device cannot learn of which apparatuses can be positioned. In other words, the second information indicates a positioning manner in which the first network device performs positioning measurement on an inventoried apparatus. The positioning manner includes performing positioning measurement on the apparatus based on a positioning reference signal sent by the apparatus, or performing positioning measurement on the apparatus based on an EPC sent by the apparatus. For example, the second information is indication information. If a value of the indication information is 0, it indicates to perform positioning measurement on the apparatus based on the positioning reference signal sent by the apparatus. If the value of the indication information is 1, it indicates to perform positioning measurement on the apparatus based on the EPC sent by the apparatus.

The third information indicates to perform positioning measurement on the first apparatus and the second apparatus during the inventory process, or to perform positioning measurement on the first apparatus and the second apparatus after the inventory process. In other words, the third information indicates a positioning order used to perform positioning measurement on the first apparatus and the second apparatus. The positioning order includes performing positioning measurement during the inventory process, or performing positioning measurement after the inventory process. For example, the third information is indication information. If a value of the indication information is 0, it indicates to perform positioning measurement on the apparatus during the inventory process, that is, perform positioning measurement on the apparatus based on the EPC sent by the apparatus. If a value of the indication information is 1, it indicates to perform positioning measurement on the apparatus after the inventory process.

The recommended configuration information includes positioning reference signal configuration information recommended by the core network device. In other words, the recommended configuration information includes the positioning reference signal configuration information recommended by the core network device for the apparatus that is inventoried by the first network device. For example, the recommended configuration information includes at least one of the following: sequence information of the positioning reference signal, frequency domain information of the positioning reference signal, or a quantity of times of sending the positioning reference signal. Optionally, the core network device determines the recommended configuration information based on a capability of the first apparatus, a capability of the second apparatus, and/or frequency domain information used by the first network device. Therefore, the first network device determines the configuration information of the positioning reference signals for the first apparatus and the second apparatus.

The fourth information indicates a measurement quantity type of positioning measurement performed on the first apparatus and the second apparatus. In other words, the fourth information indicates a measurement quantity type of positioning measurement performed on the inventoried apparatus.

Optionally, at least one piece of the second information, the third information, the recommended configuration information, and the fourth information is carried in the inventory request. For example, the second information and the third information are carried in the inventory request, and the core network device sends the recommended configuration information and the fourth information to the first network device by using independent signaling.

It should be noted that there is no fixed execution order between step 401 and step 401a. Step 401 may be performed before step 401a, or step 401a is performed before step 401, or step 401 and step 401a are simultaneously performed based on a case. This is not specifically limited in this application.

402: The first network device sends first configuration information to the first apparatus and the second apparatus. Correspondingly, the first apparatus and the second apparatus separately receive the first configuration information from the first network device.

The first configuration information is similar to the first configuration information in step 302 in the embodiment shown in FIG. 3. For details, refer to the related descriptions of the first configuration information in step 302 in the embodiment shown in FIG. 3. Details are not described herein again.

It should be noted that optionally, the first network device may determine corresponding configuration information for the first apparatus and the second apparatus respectively. For example, the first network device uses a sequence 1 as a positioning reference signal sequence of the first apparatus, and sends related information of the sequence 1 to the first apparatus. The first network device uses a sequence 2 as a positioning reference signal sequence of the second apparatus, and sends related information of the sequence 2 to the second apparatus. That is, the first apparatus and the second apparatus use different positioning reference signal sequences.

Optionally, the embodiment shown in FIG. 4A and FIG. 4B further includes step 402a and step 402b and step 403 to step 406.

402a: The first network device sends a select command to the first apparatus and the second apparatus. Correspondingly, the first apparatus and the second apparatus separately receive the select command from the first network device.

For the select command, refer to the related descriptions in step 201 in the embodiment shown in FIG. 2.

402b: The first network device sends an inventory command to the first apparatus and the second apparatus. Correspondingly, the first apparatus and the second apparatus separately receive the inventory command from the first network device.

After receiving the select command in step 402a, the first apparatus determines that the first apparatus is selected. Then, the first apparatus receives the inventory command from the first network device. After the first apparatus receives the inventory command, the first apparatus resets a slot counter of the first apparatus, specifically, may reset the slot counter to a random number 1. Each time the first apparatus receives a repeated inventory command from the first network device, a count value of the slot counter is decreased by 1. When the count value of the slot counter is equal to 0, the following step 403 is performed. After receiving the select command in step 402a, the second apparatus determines that the second apparatus is selected. After the second apparatus receives the inventory command, the second apparatus resets a slot counter of the second apparatus, specifically, may reset the slot counter to a random number 2. Each time the second apparatus receives a repeated inventory command from the first network device, a count value of the slot counter is decreased by 1. When the count value of the slot counter is equal to 0, the following step 405 is performed. It should be understood that the random number 1 and the random number 2 may not be equal.

It should be noted that optionally, the first configuration information in step 402 is carried in the inventory command in step 402b. Alternatively, the first configuration information in step 402 is carried in an independent message. This is not specifically limited in this application.

403: The first apparatus sends a first random number to the first network device. Correspondingly, the first network device receives the first random number from the first apparatus.

Optionally, the first random number is a first RN16. That is, the first random number is a 16-bit random number.

404: The first network device sends first ACK to the first apparatus. The first ACK includes frequency domain information of a positioning reference signal or an EPC of the first apparatus, and the frequency domain information includes a first frequency domain offset. Correspondingly, the first apparatus receives the first ACK from the first network device.

The first ACK indicates that the first network device successfully receives the first random number. The first frequency domain offset is an offset of a frequency domain position, occupied by the positioning reference signal or the EPC of the first apparatus, relative to a carrier center frequency. The carrier center frequency may be determined by the first apparatus by using a transmit carrier that supplies power to the first apparatus, or the carrier center frequency may be determined by the first apparatus based on a carrier of an excitation signal sent by the first network device.

Optionally, the firstACK further includes a quantity of times of sending the positioning reference signal or the EPC.

It should be noted that the first network device may alternatively send, to the first apparatus by using other signaling, at least one piece of information carried in the first ACK. This is not specifically limited in this application. For example, the first network device sends the frequency domain information of the positioning reference signal to the first apparatus by using the first ACK, and sends, to the first apparatus by using independent signaling, the quantity of times of sending the positioning reference signal.

405: The second apparatus sends a second random number to the first network device. Correspondingly, the first network device receives the second random number from the second apparatus.

Optionally, the second random number is a second RN 16. That is, the second random number is a 16-bit random number.

406: The first network device sends second ACK to the second apparatus. The second ACK includes frequency domain information of a positioning reference signal or an EPC of the second apparatus. The frequency domain information includes a second frequency domain offset. Correspondingly, the second apparatus receives the second ACK from the first network device.

The second frequency domain offset is an offset of a frequency domain position, occupied by the positioning reference signal or the EPC of the second apparatus, relative to the carrier center frequency. The first frequency domain offset is not equal to the second frequency domain offset. Optionally, the second ACK further includes a quantity of times of sending the positioning reference signal or the EPC.

It can be learned from step 404 and step 406 that the first network device sends dedicated configuration information to the first apparatus by using the first ACK, and the first network device sends dedicated configuration information to the second apparatus by using the second ACK. Therefore, each apparatus receives dedicated configuration information. The first frequency domain offset is not equal to the second frequency domain offset. This avoids interference between positioning reference signals or EPCs sent by different apparatuses, and helps improve positioning precision.

It should be noted that the first network device may alternatively send, to the second apparatus by using other signaling, at least one piece of information carried in the second ACK. This is not specifically limited in this application. For example, the first network device sends the frequency domain information of the positioning reference signal to the second apparatus by using the second ACK, and sends, to the second apparatus by using independent signaling, the quantity of times of sending the positioning reference signal.

Optionally, the embodiment shown in FIG. 4A and FIG. 4B further includes step 407 to step 410.

407: The first apparatus sends the EPC of the first apparatus to the first network device. Correspondingly, the first network device receives the EPC from the first apparatus.

408: The first network device sends the EPC of the first apparatus to the core network device. Correspondingly, the core network device receives the first EPC from the first network device.

409: The second apparatus sends the EPC of the second apparatus to the first network device. Correspondingly, the first network device receives the second EPC from the second apparatus.

410: The first network device sends the EPC of the second apparatus to the core network device. Correspondingly, the core network device receives the EPC of the second apparatus from the first network device.

It can be learned that the core network device inventories the first apparatus and the second apparatus. It should be noted that there is no fixed execution order between step 403, step 404, step 407, step 408, and step 405, step 406, step 409, step 410. Step 403, step 404, step 407 and step 408 may be performed before step 405, step 406, step 409, and step 410. Alternatively, step 405, step 406, step 409, and step 410 are performed before step 403, step 404, step 407, and step 408. This is not specifically limited in this application.

It should be noted that there is no fixed execution order between step 402a, step 402b, step 403 to step 410, and step 402. Step 402 may be performed before step 402a, step 402b, and step 403 to step 410. Alternatively, step 402a, step 402b, and step 403 to step 410 are performed before step 402. Alternatively, step 402a, step 402b, step 403 to step 410, and step 402 are simultaneously performed based on a case. This is not specifically limited in this application.

It should be noted that the foregoing step 401 to step 410 are described by using an example in which the core network device inventories the first apparatus and the second apparatus. Actually, the core network device may further inventory more apparatuses. This is not described herein.

411: The core network device sends a first excitation request to the first network device. The first excitation request includes seventh information. Correspondingly, the first network device receives the first excitation request from the core network device.

The seventh information indicates the first network device to excite the first apparatus and the second apparatus to send a positioning reference signal or an EPC.

Specifically, in a process of step 401 to step 410, the core network device inventories the first apparatus and the second apparatus. The core network device may indicate, by using the seventh information, the first network device to uniformly excite the first apparatus and the second apparatus to send the positioning reference signal or the EPC. Therefore, the first network device can excite a plurality of apparatuses at a time to send a positioning reference signal or an EPC. This reduces signaling overheads.

Optionally, the first excitation request further includes EPCs of a plurality of apparatuses in a first group. The first group includes the first apparatus and the second apparatus. The seventh information indicates the first network device to excite the plurality of apparatuses in the first group to send a positioning reference signal or an EPC.

In this implementation, the core network device can indicate, by using the seventh information, the first network device to uniformly excite the apparatuses in the first group to send the positioning reference signal or the EPC. The first group may include some or all apparatuses inventoried by the core network device. Descriptions are provided herein by using an example in which the core network device inventories the first apparatus and the second apparatus. Actually, the core network device may further inventory more apparatuses, and the first group further includes more apparatuses.

Optionally, the first excitation request is carried in a positioning activation request (positioning activation request).

412: The first network device sends an excitation signal to the first apparatus and the second apparatus. Correspondingly, the first apparatus and the second apparatus separately receive the excitation signal from the first network device.

The excitation signal is used to excite the first apparatus and the second apparatus each to send a positioning reference signal or an EPC.

It can be learned that the first network device uniformly excites the first apparatus and the second apparatus. In other words, the first network device can excite a plurality of apparatuses at a time to send a positioning reference signal or an EPC. This reduces overheads of excitation signaling.

Optionally, the first excitation request is carried in the positioning activation request. The embodiment shown in FIG. 4A and FIG. 4B further includes step 412a. Step 412a may be performed after step 412 and before step 413.

412a: The first network device sends a positioning activation response (positioning activation response) to the core network device. Correspondingly, the core network device receives the positioning activation response from the first network device.

413: The first apparatus sends the positioning reference signal or the EPC of the first apparatus to the first network device. Correspondingly, the first network device receives the positioning reference signal or the EPC from the first apparatus.

In a possible implementation, the first apparatus determines, by using the first configuration information, the sequence used to generate the positioning reference signal. Then, the first apparatus generates the positioning reference signal based on the sequence. The first apparatus determines, based on the first frequency domain offset, the frequency domain position used to send the positioning reference signal. Then, the first apparatus sends the positioning reference signal to the first network device at the frequency domain position based on the quantity of times, of sending the positioning reference signal, carried in the first ACK. Correspondingly, the first network device receives the positioning reference signal from the first apparatus at the frequency domain position.

In another possible implementation, the first apparatus determines, by using the first configuration information, the quantity of times of sending the EPC. The first apparatus determines, based on the first frequency domain offset, the frequency domain position used to send the EPC of the first apparatus. Then, the first apparatus sends the EPC to the first network device at the frequency domain position based on the quantity of sending times. Correspondingly, the first network device receives the EPC from the first apparatus at the frequency domain position.

414: The second apparatus sends the positioning reference signal or the EPC of the second apparatus to the first network device. Correspondingly, the first network device receives the positioning reference signal or the EPC from the second apparatus.

Step 414 is similar to step 413. For details, refer to the related descriptions of step 413. Details are not described herein again.

415: The first network device measures the positioning reference signal or the EPC from the first apparatus, to obtain a first measurement result, and measures the positioning reference signal or the EPC from the second apparatus, to obtain a second measurement result.

The first measurement result includes the measurement quantity obtained by the first network device by measuring the positioning reference signal or the EPC of the first apparatus. Optionally, the first network device measures the positioning reference signal or the EPC of the first apparatus based on measurement information carried in the inventory request. The second measurement result includes the measurement quantity obtained by the first network device by measuring the positioning reference signal or the EPC of the second apparatus. Optionally, the first network device measures the positioning reference signal or the EPC of the second apparatus based on measurement information carried in the inventory request.

416: The first network device sends the first measurement result and the second measurement result to the core network device. Correspondingly, the core network device receives the first measurement result and the second measurement result from the first network device.

Optionally, the first network device may send the first measurement result and the second measurement result at the same time, or may separately send the first measurement result and the second measurement result. This is not specifically limited in this application.

After the core network device receives the first measurement result and the second measurement result, the core network device performs positioning on the first apparatus based on the first measurement result, and performs positioning on the second apparatus based on the second measurement result. It should be noted that the technical solution of this application is described herein by using an example in which the core network device has a capability of performing positioning calculation and management. For example, the core network device is an LMF or a TMF/LMF. If the core network device does not have the capability of performing positioning calculation and management, after the core network device receives the first measurement result and the second measurement result, the core network device may send the first measurement result and the second measurement result to a positioning device, and then the positioning device performs positioning on the first apparatus based on the first measurement result, and performs positioning on the second apparatus based on the second measurement result. Alternatively, the first network device sends the first measurement result and the second measurement result to the positioning device, and then the positioning device performs positioning on the first apparatus based on the first measurement result, and performs positioning on the second apparatus based on the second measurement result.

Optionally, the first measurement result and the second measurement result are carried in a positioning measurement response. In this implementation, optionally, the embodiment shown in FIG. 4A and FIG. 4B further includes step 413a. Step 413a may be performed before step 413.

413a: The core network device sends a positioning measurement request to the first network device. Correspondingly, the first network device receives the positioning measurement request from the core network device.

The positioning measurement request is used to request the first network device to perform positioning measurement on the plurality of apparatuses in the first group.

This application further provides another embodiment B, and this embodiment includes step A and step B.

Step A: A core network device sends an inventory request to a first network device. Correspondingly, the first network device receives the inventory request from the core network device. Step A is similar to step 401 in the embodiment shown in FIG. 4A and FIG. 4B. For details, refer to the related descriptions of step 401 in the embodiment shown in FIG. 4A and FIG. 4B.

Optionally, this embodiment further includes step A1.

Step A1: The core network device sends at least one of the following to the first network device: first information, second information, third information, recommended configuration information, or fourth information. Step A1 is similar to step 401a in the embodiment shown in FIG. 4A and FIG. 4B. For details, refer to the related descriptions of step 401a in the embodiment shown in FIG. 4A and FIG. 4B.

Step B: The first network device performs positioning measurement on a first apparatus during or after an inventory process of the first apparatus, and performs positioning measurement on the first apparatus during or after an inventory process of the second apparatus.

Step B is described below with reference to step B1 to step B4. Optionally, step B specifically includes step B1 to step B4.

Step B1: The first network device sends an excitation signal to both the first apparatus and the second apparatus.

Step B2: The first network device receives a positioning reference signal or an EPC sent by the first apparatus.

Step B3: The first network device receives a positioning reference signal or an EPC sent by the second apparatus.

Step B4: The first network device measures the positioning reference signal or the EPC from the first apparatus, to obtain a first measurement result, and measures the positioning reference signal or the EPC from the second apparatus, to obtain a second measurement result.

Step B1 to step B4 are similar to step 412, step 413, step 414, and step 415 in the embodiment shown in FIG. 4A and FIG. 4B. For details, refer to the related descriptions of step 412, step 413, step 414, and step 415 in the embodiment shown in FIG. 4A and FIG. 4B. Details are not described herein again.

Optionally, this embodiment further includes step B5, and step B5 may be performed before step B1.

Step B5: The core network device sends a first excitation request to the first network device. Step B5 is similar to step 411 in the embodiment shown in FIG. 4A and FIG. 4B. For details, refer to the related descriptions of step 411 in the embodiment shown in FIG. 4A and FIG. 4B.

Optionally, this embodiment further includes step B6. Step B6 may be performed after step B1 and before step B2.

Step B6: The first network device sends a positioning activation response to the core network device. Step B6 is similar to step 412a in the embodiment shown in FIG. 4A and FIG. 4B. For details, refer to the related descriptions of step 412a in the embodiment shown in FIG. 4A and FIG. 4B.

Optionally, this embodiment further includes step B7, and step B7 may be performed after step B4.

Step B7: The first network device sends the first measurement result and the second measurement result to the core network device. Step B7 is similar to step 416 in the embodiment shown in FIG. 4A and FIG. 4B. For details, refer to the related descriptions of step 416 in the embodiment shown in FIG. 4A and FIG. 4B.

Optionally, this embodiment further includes step B8, and step B8 may be performed before step B2. If this embodiment further includes step B6, step B8 may be performed after step B6.

Step B8: The core network device sends a positioning measurement request to the first network device. Step B8 is similar to step 413a in the embodiment shown in FIG. 4A and FIG. 4B. For details, refer to the related descriptions of step 413a in the embodiment shown in FIG. 4A and FIG. 4B.

Optionally, this embodiment further includes step C1 to step C6. Step C1 to step C6 may be performed after step A and before step B. Step C1 to step C6 are similar to step 402a, step 402b, and step 403 to step 406 in the embodiment shown in FIG. 4A and FIG. 4B. For details, refer to the related descriptions of step 402a, step 402b, and step 403 to step 406 in the embodiment shown in FIG. 4A and FIG. 4B.

Optionally, this embodiment further includes step C7 to step C10. Step C7 to step C10 may be performed after step C6. Step C7 to step C10 are similar to step 407 to step 410 in the embodiment shown in FIG. 4A and FIG. 4B. For details, refer to step 407 to step 410 in the embodiment shown in FIG. 4A and FIG. 4B.

Optionally, this embodiment further includes step C11, and step C11 may be performed before step B.

Step C11: The first network device separately sends first configuration information to the first apparatus and the second apparatus. Step C11 is similar to step 402 in the embodiment shown in FIG. 4A and FIG. 4B. For details, refer to the related descriptions of step 402 in the embodiment shown in FIG. 4A and FIG. 4B. It should be noted that if the first apparatus and the second apparatus each include preconfigured configuration information of the positioning reference signal, the first network device does not need to configure the first configuration information for the first apparatus and the second apparatus.

There is no fixed execution order between step C11 and step C1 to step C10. Step C11 may be performed before step C1 to step C10. Alternatively, step C1 to step C10 are performed before step C11. Alternatively, step C11 and step C1 to step C10 are simultaneously performed based on a case. This is not specifically limited in this application.

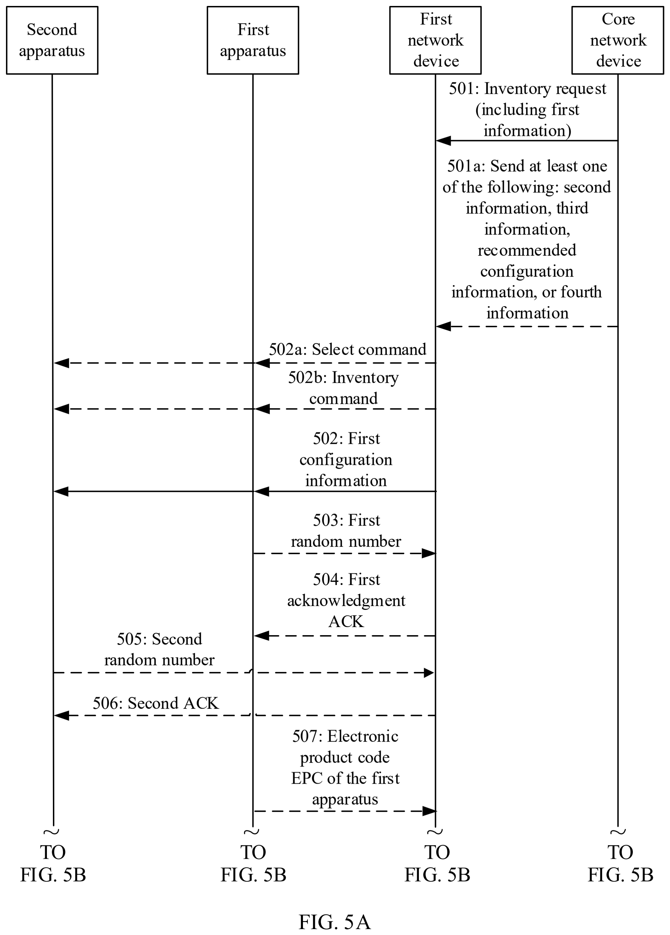

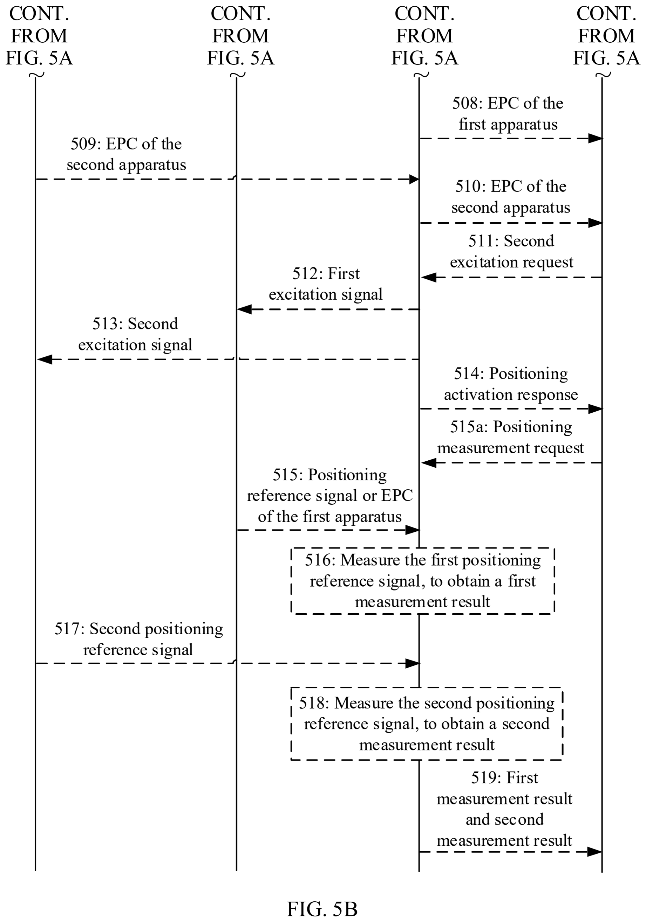

FIG. 5A and FIG. 5B are a diagram of a third embodiment of a positioning measurement method according to an embodiment of this application. Refer to FIG. 5A and FIG. 5B. The method includes the following steps.

501: A core network device sends an inventory request to a first network device. The inventory request includes first information. Correspondingly, the first network device receives the inventory request from the core network device.

Optionally, the embodiment shown in FIG. 5A and FIG. 5B further includes step 501a.

501a: The core network device sends, to the first network device, at least one of the following: second information, third information, recommended configuration information, or fourth information.

Step 501a is similar to step 401a in the embodiment shown in FIG. 4A and FIG. 4B. For details, refer to the related descriptions of step 401a in the embodiment shown in FIG. 4A and FIG. 4B.

502: The first network device sends first configuration information to a first apparatus and a second apparatus. Correspondingly, the first apparatus and the second apparatus separately receive the first configuration information from the first network device.

Step 501 and step 502 are similar to step 401 and step 402 in the embodiment shown in FIG. 4A and FIG. 4B. For details, refer to the related descriptions of step 401 and step 402 in the embodiment shown in FIG. 4A and FIG. 4B.

Optionally, the embodiment shown in FIG. 5A and FIG. 5B further includes step 502a and step 502b and step 503 to step 506.

502a: The first network device sends a select command to the first apparatus and the second apparatus. Correspondingly, the first apparatus and the second apparatus separately receive the select command from the first network device.

502b: The first network device sends an inventory command to the first apparatus and the second apparatus. Correspondingly, the first apparatus and the second apparatus separately receive the inventory command from the first network device.

503: The first apparatus sends a first random number to the first network device. Correspondingly, the first network device receives the first random number from the first apparatus.

Step 502a, step 502b, and step 503 are respectively similar to step 402a, step 402b, and step 403 in the embodiment shown in FIG. 4A and FIG. 4B. For details, refer to the related descriptions of step 402a, step 402b, and step 403 in the embodiment shown in FIG. 4A and FIG. 4B. Details are not described herein again.

504: The first network device sends first ACK to the first apparatus. Correspondingly, the first apparatus receives the first ACK from the first network device.

The first ACK indicates that the first network device successfully receives the first random number.

Optionally, the first ACK includes at least one of the following: a quantity of times of sending a positioning reference signal of the first apparatus, or frequency domain information of the positioning reference signal of the first apparatus. Alternatively, the first ACK includes at least one of the following: a quantity of times of sending an EPC of the first apparatus, or frequency domain information of the EPC of the first apparatus. Therefore, the first network device sends dedicated configuration information to the first apparatus. This helps improve positioning precision.

It should be noted that the first network device may alternatively send, to the first apparatus by using other signaling, at least one piece of information carried in the first ACK. This is not specifically limited in this application. For example, the first network device sends the frequency domain information of the positioning reference signal to the first apparatus by using the first ACK, and sends, to the first apparatus by using independent signaling, the quantity of times of sending the positioning reference signal.

505: The first network device sends a second random number to the first network device. Correspondingly, the first network device receives the second random number from the second apparatus.

Step 505 is similar to step 405 in the embodiment shown in FIG. 4A and FIG. 4B. For details, refer to the related descriptions of step 405 in the embodiment shown in FIG. 4A and FIG. 4B. Details are not described herein again.

506: The first network device sends second ACK to the second apparatus. Correspondingly, the second apparatus receives the second ACK from the first network device.

The second ACK indicates that the first network device successfully receives the second random number. Optionally, the second ACK includes at least one of the following: a quantity of times of sending a positioning reference signal or frequency domain information of the positioning reference signal. Alternatively, the second ACK includes at least one of the following: a quantity of times of sending an EPC of the second apparatus, or frequency domain information of the EPC of the second apparatus.

Optionally, the frequency domain information of the positioning reference signal of the first apparatus may be the same as the frequency domain information of the positioning reference signal of the second apparatus. Alternatively, the frequency domain information of the EPC of the first apparatus may be the same as the frequency domain information of the EPC of the second apparatus. This improves frequency-domain resource utilization.

It can be learned that in step 504 and step 506, the first network device sends dedicated configuration information to the first apparatus by using the first ACK. The first network device sends dedicated configuration information to the second apparatus by using the second ACK. Therefore, each apparatus receives dedicated configuration information. This helps improve positioning precision.

It should be noted that the first network device may alternatively send, to the second apparatus by using other signaling, at least one piece of information carried in the second ACK. This is not specifically limited in this application. For example, the first network device sends the frequency domain information of the positioning reference signal to the second apparatus by using the second ACK, and sends, to the second apparatus by using independent signaling, the quantity of times of sending the positioning reference signal.

Optionally, the embodiment shown in FIG. 5A and FIG. 5B further includes step 507 to step 510.

507: The first apparatus sends the EPC of the first apparatus to the first network device. Correspondingly, the first network device receives the EPC from the first apparatus.

508: The first network device sends the EPC of the first apparatus to the core network device. Correspondingly, the core network device receives the first EPC from the first network device.

509: The second apparatus sends the EPC of the second apparatus to the first network device. Correspondingly, the first network device receives the second EPC from the second apparatus.

510: The first network device sends the EPC of the second apparatus to the core network device. Correspondingly, the core network device receives the EPC of the second apparatus from the first network device.

Step 507 to step 510 are similar to step 407 to step 410 in the embodiment shown in FIG. 4A and FIG. 4B. For details, refer to the related descriptions of step 407 to step 410 in the embodiment shown in FIG. 4A and FIG. 4B. Details are not described herein again.

It should be noted that there is no fixed execution order between step 503, step 504, step 507, step 508, and step 505, step 506, step 509, step 510. Step 503, step 504, step 507 and step 508 may be performed before step 505, step 507, step 509, and step 510. Alternatively, step 505, step 506, step 509, and step 510 are performed before step 503, step 504, step 507, and step 508. This is not specifically limited in this application.

It should be noted that there is no fixed execution order between step 502a, step 502b, step 503 to step 510, and step 502. Step 502 may be performed before step 502a, step 502b, and step 503 to step 510. Alternatively, step 502a, step 502b, and step 503 to step 510 are performed before step 502. Alternatively, step 502a, step 502b, step 503 to step 510, and step 502 are simultaneously performed based on a case. This is not specifically limited in this application.

It should be noted that the foregoing step 501 to step 510 are described by using an example in which the core network device inventories the first apparatus and the second apparatus. Actually, the core network device may further inventory more apparatuses. This is not described herein.

Optionally, the embodiment shown in FIG. 5A and FIG. 5B further includes step 511. Step 511 may be performed after step 510.

511: The core network device sends a second excitation request to the first network device. Correspondingly, the first network device receives the second excitation request from the core network device.

The second excitation request includes eighth information, EPCs of a plurality of apparatuses in a first group, and ninth information. The first group includes the first apparatus and the second apparatus. The ninth information indicates excitation time sequences respectively corresponding to the plurality of apparatuses in the first group. The eighth information indicates the first network device to excite, based on the excitation time sequences respectively corresponding to the plurality of apparatuses, the plurality of apparatuses in the first group to send a positioning reference signal or an EPC.

For example, the excitation time sequence corresponding to the plurality of apparatuses in the first group may be a time sequence number or absolute time. Some possible representation forms of excitation time sequences corresponding to the plurality of apparatuses in the first group are described below. Details are shown in Table 4.

**Table 4**

| EPC | Time sequence number |
|---|---|
| EPC1 | 1 |
| EPC2 | 2 |

In Table 4, EPC1 of the first apparatus corresponds to the time sequence number 1, and EPC2 of the second apparatus corresponds to the time sequence number 2. Therefore, it can be learned that the core network device indicates the first network device to first excite the first apparatus, and then excite the second apparatus.

Details are shown in Table 5.

**Table 5**

| EPC | Absolute time |
|---|---|
| EPC1 | Time point 1 |
| EPC2 | Time point 2 |

In Table 5, the EPC1 of the first apparatus corresponds to the time point 1, and the EPC2 of the second apparatus corresponds to the time point 2. The time point 1 is later than the time point 2. Therefore, it can be learned that the core network device indicates the first network device to first excite the first apparatus, and then excite the second apparatus. Specifically, the first network device excites the first apparatus at the time point 1 and excites the second apparatus at the time point 2.

Optionally, the core network device determines, according to receiving orders of the EPCs and/or signal strengths of the EPCs, the excitation time sequences respectively corresponding to the plurality of apparatuses. For example, the core network device first receives the EPC of the first apparatus, and then receives the EPC of the second apparatus. Therefore, an excitation time sequence of the first apparatus may be before an excitation time sequence of the second apparatus. For example, a signal strength of the EPC received by the core network device from the first apparatus is greater than a signal strength of the EPC received from the second apparatus. Therefore, an excitation time sequence of the first apparatus may be before an excitation time sequence of the second apparatus.

In this implementation, the first network device excites, based on the excitation time sequences respectively corresponding to the plurality of apparatuses, the plurality of apparatuses in the first group to send a positioning reference signal or an EPC. Therefore, the first network device centrally controls moments at which the plurality of apparatuses send the positioning reference signal or the EPC, so that the plurality of apparatuses send the positioning reference signal or the EPC at different moments. This avoids positioning measurement interference. In another aspect, the first network device can separately excite the plurality of apparatuses based on the excitation time sequences corresponding to the plurality of apparatuses. This reduces signaling interaction, and appropriately uses positioning time to improve time usage.

The technical solution of this application is described below by using an example in which the first network device first excites the first apparatus to send the positioning reference signal or the EPC, and then excites the second apparatus to send the positioning reference signal or the EPC.

Optionally, the embodiment shown in FIG. 5A and FIG. 5B further includes step 512 and step 513. Step 512 and step 513 may be performed after step 511. Step 513 is performed after step 512.

512: The first network device sends a first excitation signal to the first apparatus. Correspondingly, the first apparatus receives the first excitation signal from the first network device.

The first excitation signal is used to excite the first apparatus to send the positioning reference signal or the EPC.

513: The first network device sends a second excitation signal to the second apparatus. Correspondingly, the second apparatus receives the second excitation signal from the first network device.

The second excitation signal is used to excite the second apparatus to send the positioning reference signal or the EPC.

Optionally, the second excitation request in step 511 is carried in a positioning activation request. Correspondingly, optionally, the embodiment shown in FIG. 4A and FIG. 4B further includes step 514. Step 514 may be performed after step 513.

514: The first network device sends a positioning activation response to the core network device. Correspondingly, the core network device receives the positioning activation response from the first network device.

Optionally, the embodiment shown in FIG. 5A and FIG. 5B further includes step 515 to step 519. Step 515 to step 519 may be performed after step 514. If the embodiment shown in FIG. 5A and FIG. 5B further includes step 514, step 515 to step 519 may be performed after step 514.

515: The first apparatus sends the positioning reference signal or the EPC to the first network device. Correspondingly, the first network device receives the positioning reference signal or the EPC from the first apparatus.

In a possible implementation, the first apparatus determines, by using the first configuration information, the sequence used to generate the positioning reference signal. Then, the first apparatus generates the positioning reference signal based on the sequence. The first apparatus determines, based on the frequency domain information carried in the first ACK, a frequency domain position used to send the positioning reference signal. Then, the first apparatus sends the positioning reference signal to the first network device at the frequency domain position based on the quantity of sending times carried in the first ACK. Correspondingly, the first network device receives the positioning reference signal from the first apparatus at the frequency domain position.

In another possible implementation, the first apparatus determines, by using the first configuration information, the quantity of times of sending the EPC. The first apparatus determines, by using the frequency domain information carried in the first ACK, a frequency domain position used to send the EPC. Then, the first apparatus sends the EPC to the first network device at the frequency domain position based on the quantity of sending times. Correspondingly, the first network device receives the EPC from the first apparatus at the frequency domain position.

516: The first network device measures the positioning reference signal or the EPC from the first apparatus, to obtain a first measurement result.

For the first measurement result, refer to the related descriptions of step 415 in the embodiment shown in FIG. 4A and FIG. 4B.

517: The second apparatus sends the positioning reference signal or the EPC to the first network device. Correspondingly, the first network device receives the positioning reference signal or the EPC from the second apparatus.

Step 517 is similar to step 515. For details, refer to the related descriptions of step 515. Details are not described herein again.

518: The first network device measures the positioning reference signal or the EPC from the second apparatus, to obtain a second measurement result.

For the second measurement result, refer to the related descriptions of step 415 in the embodiment shown in FIG. 4A and FIG. 4B.

519: The first network device sends the first measurement result and the second measurement result to the core network device. Correspondingly, the core network device receives the first measurement result and the second measurement result from the first network device.

For details about step 519, refer to the related descriptions of step 416 in the embodiment shown in FIG. 4A and FIG. 4B, and details are not described herein again.

Optionally, the first measurement result and the second measurement result are carried in a positioning measurement response. In this implementation, optionally, the embodiment shown in FIG. 5A and FIG. 5B further includes step 515a. Step 515a may be performed before step 515.

515a: The core network device sends a positioning measurement request to the first network device. Correspondingly, the first network device receives the positioning measurement request from the core network device.

The positioning measurement request is used to request the first network device to perform positioning measurement on the plurality of apparatuses in the first group.

In the embodiment shown in FIG. 4A and FIG. 4B or FIG. 5A and FIG. 5B, the core network device sends the inventory request to the first network device. The inventory request is used to request inventory of the first apparatus. The inventory request includes the first information, and the first information indicates the first network device to perform positioning measurement on the first apparatus during or after an inventory process of the first apparatus and perform positioning measurement on the second apparatus during or after an inventory process of the second apparatus. Correspondingly, the first network device receives the inventory request from the core network device. The first network device sends the first configuration information to the first apparatus and the second apparatus. The first configuration information includes the configuration information of the positioning reference signal. This facilitates performing positioning measurement on the first apparatus and the second apparatus during or after the inventory process, thereby meeting a positioning requirement during or after the inventory process.

This application further provides another Embodiment C, and this embodiment includes step a and step b.

Step a: A core network device sends an inventory request to a first network device. Correspondingly, the first network device receives the inventory request from the core network device. Step a is similar to step 501 in the embodiment shown in FIG. 5A and FIG. 5B. For details, refer to the related descriptions of step 501 in the embodiment shown in FIG. 5A and FIG. 5B.

Optionally, this embodiment further includes step a1. Step a1 is similar to step 501a in the embodiment shown in FIG. 5A and FIG. 5B. For details, refer to the related descriptions of step 501a in the embodiment shown in FIG. 5A and FIG. 5B.

Step b: The first network device performs positioning measurement on a first apparatus during or after an inventory process of the first apparatus, and performs positioning measurement on the first apparatus during or after an inventory process of the second apparatus.

Optionally, this embodiment further includes step c. Step c may be performed before step b.

Step c: The first network device receives a second excitation request from the core network device. Step c is similar to step 511 in the embodiment shown in FIG. 5A and FIG. 5B. For details, refer to step 511 in the embodiment shown in FIG. 5A and FIG. 5B.

Step b is described below with reference to step b1 to step b3. Optionally, step b specifically includes step b1 to step b3.

Step b1: The first network device separately excites, based on excitation time sequences respectively corresponding to a plurality of apparatuses, the plurality of apparatuses in a first group to send the positioning reference signal or EPC.

Step b2: The first network device receives the positioning reference signals or the EPCs sent by the plurality of apparatuses in the first group.

Step b3: The first network device separately measures the positioning reference signals or the EPCs from the plurality of apparatuses, to obtain corresponding measurement results.

Herein, a process in which the first network device performs positioning measurement on the first apparatus and the second apparatus is described by using an example in which the plurality of apparatuses in the first group include the first apparatus and the second apparatus. For details, refer to the related descriptions of step 512 to step 519 in the embodiment shown in FIG. 5A and FIG. 5B. Details are not described herein again.

Optionally, this embodiment further includes step c1 to step c6, and step c1 and step c6 may be performed after step a and before step b. Step c1 to step c6 are similar to step 502a, step 502b, and step 503 to step 506 in the embodiment shown in FIG. 5A and FIG. 5B. For details, refer to the related descriptions of step 502a, step 502b, and step 503 to step 506 in the embodiment shown in FIG. 5A and FIG. 5B.

Optionally, this embodiment further includes step c7 to step c10, and step c7 to step c10 may be performed after step c6. Step c7 to step c10 are similar to step 507 to step 510 in the embodiment shown in FIG. 5A and FIG. 5B. For details, refer to the related descriptions of step 507 to step 510 in the embodiment shown in FIG. 5A and FIG. 5B.

Optionally, this embodiment further includes step c11. Step c11 may be performed before step b.

Step c11: The first network device separately sends first configuration information to the first apparatus and the second apparatus. Step c11 is similar to step 502 in the embodiment shown in FIG. 5A and FIG. 5B. For details, refer to the related descriptions of step 502 in the embodiment shown in FIG. 5A and FIG. 5B. It should be noted that if the first apparatus and the second apparatus each include preconfigured configuration information of the positioning reference signal, the first network device does not need to configure the first configuration information for the first apparatus and the second apparatus.

There is no fixed execution order between step c11 and step c1 to step c10. Step c11 may be performed before step c1 to step c10. Alternatively, step c1 to step c10 are performed before step c11. Alternatively, step c11 and step c1 to step c10 are simultaneously performed based on a case. This is not specifically limited in this application.

The first apparatus provided in embodiments of this application is described below.

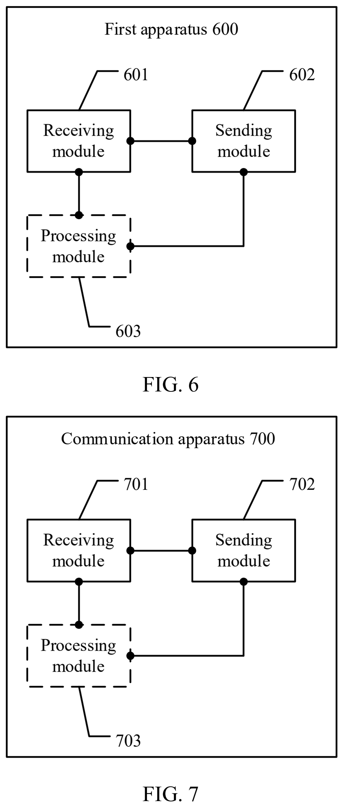

FIG. 6 is a diagram of a structure of a first apparatus according to an embodiment of this application. Refer to FIG. 6. The communication apparatus may be configured to perform a process performed by the first apparatus in any one of embodiments shown in FIG. 3, FIG. 4A and FIG. 4B, and FIG. 5A and FIG. 5B, Embodiment A, Embodiment B, and Embodiment C. For details, refer to the related descriptions of the foregoing method embodiments.

The first apparatus 600 includes a receiving module 601 and a sending module 602. Optionally, the first apparatus 600 further includes a processing module 603. The receiving module 601 and the sending module 602 may implement corresponding communication functions. The processing module 603 is configured to process data.

Optionally, the first apparatus 600 may further include a storage module. The storage module may be configured to store instructions and/or data. The processing module 603 may read the instructions and/or the data in the storage module, to enable the first apparatus 600 to implement the foregoing method embodiments.

The first apparatus 600 may be configured to perform an action performed by the first apparatus in the foregoing method embodiments. The first apparatus 600 may be a first apparatus or a component that may be configured in the first apparatus. The processing module 603 is configured to perform a processing-related operation on a first apparatus side in the foregoing method embodiments. The receiving module 601 is configured to perform a receiving-related operation on the first apparatus side in the foregoing embodiments. The sending module 602 is configured to perform a sending-related operation on the first apparatus side in the foregoing method embodiments.

It needs to be noted that the first apparatus 600 may include the sending module 602 but does not include the receiving module 601. Alternatively, the first apparatus 600 may include the receiving module 601, but does not include the sending module 602. This may be specifically determined based on whether the foregoing solution performed by the first apparatus 600 includes a sending action and a receiving action.

Optionally, the first apparatus 600 is configured to perform an action performed by the first apparatus in any one of embodiments in FIG. 3, FIG. 4A and FIG. 4B, and FIG. 5A and FIG. 5B.

The receiving module 601 is configured to receive an inventory command from a first network device, where the inventory command is used for inventory of the first apparatus.

The sending module 602 is configured to send a first random number to the first network device.

The receiving module 601 is further configured to receive first ACK from the first network device, where the first ACK indicates that the first network device successfully receives the first random number, and the first ACK includes at least one of the following: a quantity of times of sending a positioning reference signal or frequency domain information of the positioning reference signal, or the first ACK includes at least one of the following: a quantity of times of sending an EPC of the first apparatus or frequency domain information of the EPC.

Optionally, the frequency domain information of the positioning reference signal or the EPC includes a first frequency domain offset, and the first frequency domain offset is an offset of a frequency domain position, occupied by the positioning reference signal or the EPC of the first apparatus, relative to a carrier center frequency.

Optionally, the first ACK further includes fifth information, and the fifth information indicates the first apparatus 600 to send the positioning reference signal after the EPC is sent; or the first ACK further includes sixth information, and the sixth information indicates that the EPC sent by the first apparatus 600 is used to perform positioning measurement on the first apparatus 600.

It should be understood that specific processes in which the modules perform the foregoing corresponding processes have been described in detail in the foregoing method embodiments. For brevity, details are not described herein again.

The processing module 603 in the foregoing embodiment may be implemented by at least one processor or processor-related circuit. The receiving module 601 and the sending module 602 may be implemented by a transceiver or a transceiver-related circuit. The receiving module 601 and the sending module 602 may also be collectively referred to as a transceiver module, a communication module, or a communication interface. The storage module may be implemented by at least one storage.

FIG. 7 is a diagram of a structure of a communication apparatus according to an embodiment of this application. Refer to FIG. 7. The communication apparatus may be configured to perform a process performed by the first network device or the core network device in embodiments shown in FIG. 3, FIG. 4A and FIG. 4B, and FIG. 5A and FIG. 5B. For details, refer to the related descriptions of the foregoing method embodiments.

The communication apparatus 700 includes a receiving module 701 and a sending module 702. Optionally, the communication apparatus 700 further includes a processing module 703. The receiving module 701 and the sending module 702 may implement corresponding communication functions. The processing module 703 is configured to process data.

Optionally, the communication apparatus 700 may further include a storage module. The storage module may be configured to store instructions and/or data. The processing module 703 may read the instructions and/or the data in the storage module, to enable the communication apparatus 700 to implement the foregoing method embodiments.

It needs to be noted that the communication apparatus 700 may include the sending module 702 but does not include the receiving module 701. Alternatively, the communication apparatus 700 may include the receiving module 701, but does not include the sending module 702. This may be specifically determined based on whether the foregoing solution performed by the communication apparatus 700 includes a sending action and a receiving action.

In a possible implementation, the communication apparatus 700 is configured to perform an action performed by the first network device in any one of embodiments in FIG. 3, FIG. 4A and FIG. 4B, and FIG. 5A and FIG. 5B. For example, the communication apparatus 700 performs the following solution.

The receiving module 701 is configured to receive an inventory request from a core network device, where the inventory request is used to request inventory of a first apparatus, the inventory request includes first information, and the first information indicates the communication apparatus 700 to perform positioning measurement on the first apparatus during or after an inventory process of the first apparatus.

The sending module 702 is configured to send first configuration information to the first apparatus, where the first configuration information includes configuration information of a positioning reference signal of the first apparatus.

In another possible implementation, the communication apparatus 700 is configured to perform an action performed by the core network device in any one of embodiments in FIG. 3, FIG. 4A and FIG. 4B, and FIG. 5A and FIG. 5B. For example, the communication apparatus 700 performs the following solution.

The sending module 702 is configured to send an inventory request to a first network device, where the inventory request is used to request inventory of a first apparatus, the inventory request includes first information, and the first information indicates the first network device to perform positioning measurement on the first apparatus during or after an inventory process of the first apparatus.

The receiving module 701 is configured to receive first configuration information from the first network device, where the first configuration information includes configuration information of a positioning reference signal of the first apparatus.

It should be understood that specific processes in which the modules perform the foregoing corresponding processes have been described in detail in the foregoing method embodiments. For brevity, details are not described herein again.

The processing module 703 in the foregoing embodiment may be implemented by at least one processor or processor-related circuit. The receiving module 701 and the sending module 702 may be implemented by a transceiver or a transceiver-related circuit. The receiving module 701 and the sending module 702 may also be collectively referred to as a transceiver module, a communication module, or a communication interface. The storage module may be implemented by at least one storage.

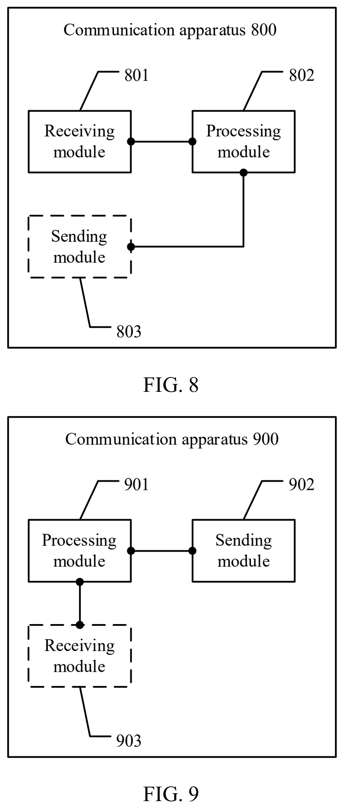

FIG. 8 is a diagram of another structure of a communication apparatus according to an embodiment of this application. Refer to FIG. 8. The communication apparatus may be configured to perform a process performed by the first network device in any one of Embodiment A, Embodiment B, and Embodiment C. For details, refer to the related descriptions of the foregoing method embodiments.

The communication apparatus 800 includes a receiving module 801 and a processing module 802. Optionally, the communication apparatus further includes a sending module 803. The receiving module 801 and the sending module 803 may implement corresponding communication functions. The processing module 802 is configured to process data.

Optionally, the communication apparatus 800 may further include a storage module. The storage module may be configured to store instructions and/or data. The processing module 802 may read the instructions and/or the data in the storage module, to enable the communication apparatus 800 to implement the foregoing method embodiments.

It needs to be noted that the communication apparatus 800 may include the sending module 803 but does not include the receiving module 801. Alternatively, the communication apparatus 800 may include the receiving module 801, but does not include the sending module 803. This may be specifically determined based on whether the foregoing solution performed by the communication apparatus 800 includes a sending action and a receiving action.

The communication apparatus 800 is configured to perform an action performed by the first network device in any one of Embodiment A, Embodiment B, and Embodiment C. For example, the communication apparatus 800 performs the following solution.

The receiving module 801 is configured to receive an inventory request from a core network device, where the inventory request is used to request inventory of a first apparatus, the inventory request includes first information, and the first information indicates the communication apparatus 800 to perform positioning measurement on the first apparatus.

The processing module 802 is configured to perform positioning measurement on the first apparatus during or after an inventory process of the first apparatus.

It should be understood that specific processes in which the modules perform the foregoing corresponding processes have been described in detail in the foregoing method embodiments. For brevity, details are not described herein again.

The processing module 802 in the foregoing embodiment may be implemented by at least one processor or processor-related circuit. The receiving module 801 and the sending module 803 may be implemented by a transceiver or a transceiver-related circuit. The receiving module 801 and the sending module 803 may also be collectively referred to as a transceiver module, a communication module, or a communication interface. The storage module may be implemented by at least one storage.

FIG. 9 is a diagram of still another structure of a communication apparatus according to an embodiment of this application. Refer to FIG. 9. The communication apparatus may be configured to perform a process performed by the core network device in any one of Embodiment A, Embodiment B, and Embodiment C. For details, refer to the related descriptions of the foregoing method embodiments.

The communication apparatus 900 includes a processing module 901 and a sending module 902. Optionally, the communication apparatus further includes a receiving module 903. The sending module 902 and the receiving module 903 may implement corresponding communication functions. The processing module 901 is configured to process data.

Optionally, the communication apparatus 900 may further include a storage module. The storage module may be configured to store instructions and/or data. The processing module 901 may read the instructions and/or the data in the storage module, to enable the communication apparatus 900 to implement the foregoing method embodiments.

It needs to be noted that the communication apparatus 900 may include the sending module 902 but does not include the receiving module 903. Alternatively, the communication apparatus 900 may include the receiving module 903, but does not include the sending module 902. This may be specifically determined based on whether the foregoing solution performed by the communication apparatus 900 includes a sending action and a receiving action.

The communication apparatus 900 is configured to perform an action performed by the core network device in any one of Embodiment A, Embodiment B, and Embodiment C. For example, the communication apparatus 900 performs the following solution.

The processing module 901 is configured to determine an inventory request, where the inventory request is used to request inventory of a first apparatus, the inventory request includes first information, and the first information indicates a first network device to perform positioning measurement on the first apparatus.

The sending module 902 is configured to send the inventory request to the first network device.

It should be understood that specific processes in which the modules perform the foregoing corresponding processes have been described in detail in the foregoing method embodiments. For brevity, details are not described herein again.

The processing module 901 in the foregoing embodiment may be implemented by at least one processor or processor-related circuit. The sending module 902 and the receiving module 903 may be implemented by a transceiver or a transceiver-related circuit. The sending module 902 and the receiving module 903 may also be collectively referred to as a transceiver module, a communication module, or a communication interface. The storage module may be implemented by at least one storage.

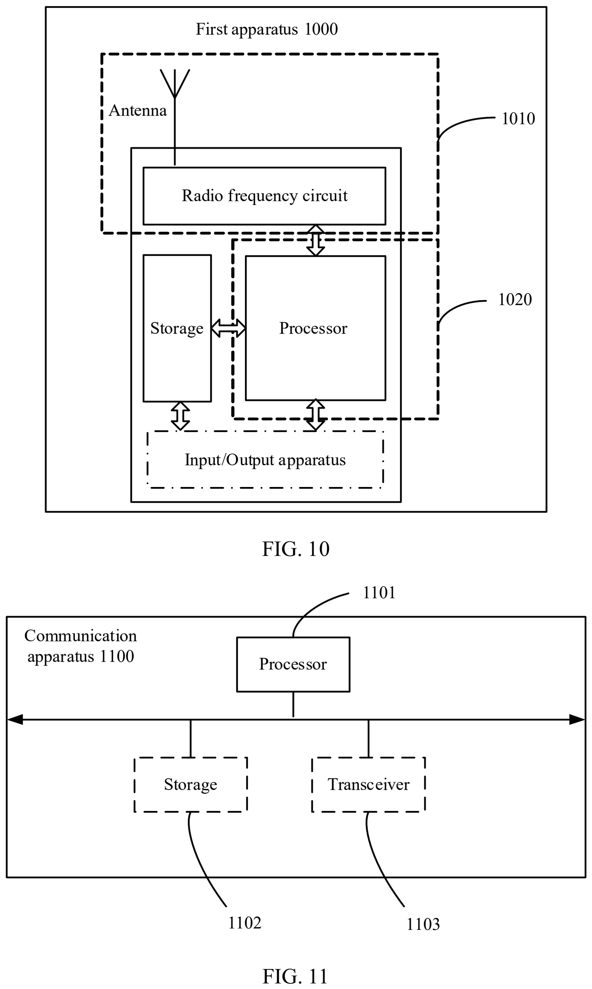

Embodiments of this application further provide a first apparatus. FIG. 10 is a diagram of another structure of a first apparatus according to an embodiment of this application. Refer to FIG. 10. The first apparatus 1000 may be the first apparatus in the foregoing method embodiments, or may be a component (for example, a chip), a module, or a unit of the first apparatus in the foregoing method embodiments. The first apparatus 1000 may be configured to perform an operation performed by the first apparatus in the foregoing method embodiments.

A processor is mainly configured to: process data or a signal, control the first apparatus, execute a corresponding software program, process data of the software program, and the like.

It should be noted that the processor has a weak capability of implementing a signal processing algorithm, and therefore cannot implement a complex signal processing algorithm.

A storage is mainly configured to store the software program and data. A radio frequency circuit is mainly configured to: perform conversion between a baseband signal and a radio frequency signal, and process the radio frequency signal.

An antenna is mainly configured to receive and send a radio frequency signal in a form of an electromagnetic wave.

Optionally, the first apparatus 1000 further includes an input/output apparatus, for example, a touchscreen, a display, or a keyboard, mainly configured to: receive data input by a user and output data to the user.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the first apparatus, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 10 shows only one storage and one processor. In an actual product of the first apparatus, there may be one or more processors and one or more storages. The storage may also be referred to as a storage medium, a storage device, or the like. The storage may be disposed independent of the processor, or may be integrated with the processor. This is not limited in embodiments of this application.

In embodiments of this application, the antenna and the radio frequency circuit that have a transceiver function may be considered as a transceiver unit of the first apparatus, and the processor having a processing function may be considered as a processing unit of the first apparatus. As shown in FIG. 10, the first apparatus includes the transceiver unit 1010 and the processing unit 1020. The transceiver unit may also be referred to as a transceiver, a transceiver device, a transceiver apparatus, or the like. The processing unit may also be referred to as a processor, a processing board, a processing module, a processing apparatus, or the like.

Optionally, a component configured to implement a receiving function in the transceiver unit 1010 may be considered as a receiving unit, and a component configured to implement a sending function in the transceiver unit 1010 may be considered as a sending unit. In other words, the transceiver unit 1010 includes the receiving unit and the sending unit. The transceiver unit may also be referred to as the transceiver machine, the transceiver, the transceiver circuit, or the like. The receiving unit may also be referred to as a receiver, a receiver machine, a receiver circuit, or the like. The sending unit may also be referred to as a transmitter, a transmitter machine, a transmit circuit, or the like.

It should be understood that the transceiver unit 1010 is configured to perform a sending operation and a receiving operation of first apparatus in the foregoing method embodiments, and the processing unit 1020 is configured to perform an operation other than the receiving operation and the sending operation of the first apparatus in the foregoing method embodiments.

When the first apparatus is the chip, the chip includes a transceiver unit and a processing unit. The transceiver unit may be an input/output circuit or a communication interface. The processing unit is a processor, a microprocessor, an integrated circuit, or a logic circuit integrated on the chip. In the foregoing method embodiments, a sending operation corresponds to an output of the input/output circuit, and a receiving operation corresponds to an input of the input/output circuit.

This application further provides a communication apparatus. FIG. 11 is a diagram of still another structure of a communication apparatus according to an embodiment of this application. Refer to FIG. 11. The communication apparatus 1100 includes a processor 1101. Optionally, the communication apparatus 1100 further includes a storage 1102.

Optionally, the communication apparatus 1100 further includes a transceiver 1103.

In a possible implementation, the processor 1101, the storage 1102, and the transceiver 1103 are separately connected through a bus. The storage 1102 stores computer instructions.

When the communication apparatus 1100 includes a first network device, or a component (for example, a chip), a module, or a unit in the first network device, the communication apparatus 1100 may be configured to perform steps performed by the first network device in the embodiment shown in FIG. 3, the embodiment shown in FIG. 4A and FIG. 4B, the embodiment shown in FIG. 5A and FIG. 5B, Embodiment A, Embodiment B, and Embodiment C. For details, refer to the related descriptions of the foregoing method embodiments.

The processing module 703 in the embodiment shown in FIG. 7 may be the processor 1101, and the receiving module 701 and the sending module 702 in the embodiment shown in FIG. 7 may be the transceiver 1103. Alternatively, the processing module 802 in the embodiment shown in FIG. 8 may be the processor 1101, and the receiving module 801 and the sending module 803 in the embodiment shown in FIG. 8 may be the transceiver 1103.

When the communication apparatus 1100 includes a core network device, or a component (for example, a chip), a module, or a unit in the core network device, the communication apparatus 1100 may be configured to perform steps performed by the positioning device in the embodiment shown in FIG. 3, the embodiment shown in FIG. 4A and FIG. 4B, the embodiment shown in FIG. 5A and FIG. 5B, Embodiment A, Embodiment B, and Embodiment C. For details, refer to the related descriptions of the foregoing method embodiments.

The processing module 703 in the embodiment shown in FIG. 7 may be the processor 1101, and the receiving module 701 and the sending module 702 in the embodiment shown in FIG. 7 may be the transceiver 1103. Alternatively, the processing module 901 in the embodiment shown in FIG. 9 may be the processor 1101, and the sending module 902 and the receiving module 903 in the embodiment shown in FIG. 9 may be the transceiver 1103.

When the communication apparatus 1100 is the chip, the chip includes a transceiver, a storage, and a processor. The transceiver may be an input/output circuit or a communication interface. The processor is a processor, a microprocessor, or an integrated circuit integrated on the chip. The sending operation of the first network device or the core network device in the foregoing method embodiments may be understood as an output of the chip, and the receiving operation of the first network device or the core network device in the foregoing method embodiments may be understood as an input of the chip.

This application further provides a communication apparatus 1200. The communication apparatus 1200 may be a first network device or a chip. The communication apparatus 1200 may be configured to perform operations performed by the first network device in the embodiment shown in FIG. 3, the embodiment shown in FIG. 4A and FIG. 4B, the embodiment shown in FIG. 5A and FIG. 5B, Embodiment A, Embodiment B, and Embodiment C.

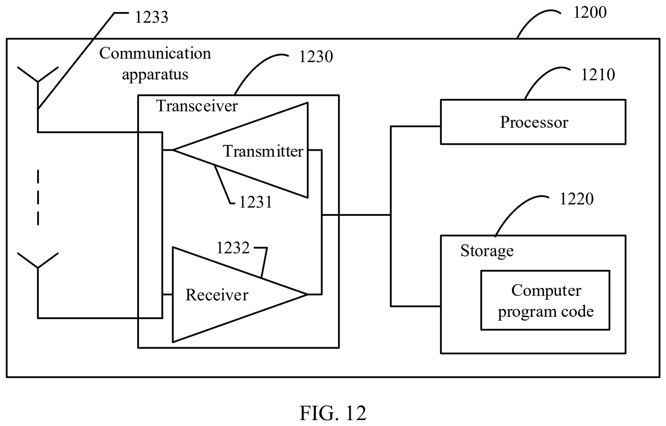

When the communication apparatus 1200 is the first network device, for example, a base station, FIG. 12 is a diagram of a structure of a simplified base station. The base station includes a part 1210, a part 1220, and a part 1230.

The part 1210 is mainly configured to: perform baseband processing, control the base station, and the like. The part 1210 is usually a control center of the base station, may be usually referred to as a processor, and is configured to control the base station to perform a processing operation on a first network device side in the foregoing method embodiments. The part 1220 is mainly configured to store computer program code and data. The part 1230 is mainly configured to: send and receive a radio frequency signal, and perform conversion between the radio frequency signal and a baseband signal. The part 1230 may be usually referred to as a transceiver module, a transceiver machine, a transceiver circuit, a transceiver, or the like. The transceiver module in the part 1230 may also be referred to as a transceiver machine, a transceiver, or the like, and includes an antenna 1233 and a radio frequency circuit (not shown in the figure). The radio frequency circuit is mainly configured to perform radio frequency processing. Optionally, in the part 1230, a component configured to implement a receiving function may be considered as a receiver, and a component configured to implement a sending function may be considered as a transmitter. In other words, the part 1230 includes a receiver 1232 and a transmitter 1231. The receiver may also be referred to as a receiving module, a receiver machine, a receiver circuit, or the like, and the transmitter may be referred to as a transmitting module, a transmitter machine, a transmitter circuit, or the like.

The part 1210 and the part 1220 may include one or more boards, and each board may include one or more processors and one or more storages. The processor is configured to read and execute a program in the storage, to implement a baseband processing function and control the base station. If there are a plurality of boards, the boards may be interconnected with each other to enhance a processing capability. In an optional implementation, a plurality of boards may share one or more processors, or the plurality of boards share one or more storages, or the plurality of boards share one or more processors at the same time.

For example, in an implementation, the transceiver module in the 1230 part is configured to perform receiving and sending-related processes performed by the first network device in embodiments shown in FIG. 3 to FIG. 5B, Embodiment A, Embodiment B, and Embodiment C. The processor in the part 1210 is configured to perform processing-related processes performed by the first network device in embodiments shown in FIG. 3 to FIG. 5B, Embodiment A, Embodiment B, and Embodiment C.

It should be understood that FIG. 12 is merely an example rather than a limitation, and the first network device including the processor, the storage, and the transceiver may not depend on the structure shown in FIG. 7, FIG. 8, or FIG. 12.

When the communication apparatus 1200 is the chip, the chip includes a transceiver, a storage, and a processor. The transceiver may be an input/output circuit or a communication interface. The processor is a processor, a microprocessor, or an integrated circuit integrated on the chip. A sending operation performed by the first network device in the foregoing method embodiments may be understood as an output of the chip, and a receiving operation performed by the first network device in the foregoing method embodiments may be understood as an input of the chip.

An embodiment of this application further provides a computer-readable storage medium. The computer-readable storage medium stores computer instructions used to implement the methods performed by the first apparatus, the first network device, or the core network device in the foregoing method embodiments.

For example, when a computer program is executed by a computer, the computer can be enabled to implement the method performed by the first apparatus, the first network device, or the core network device in the foregoing method embodiments.

An embodiment of this application further provides a computer program product including instructions. When the instructions are executed by a computer, the computer is enabled to implement the method performed by the first apparatus, the first network device, or the core network device in the foregoing method embodiments.

An embodiment of this application further provides a communication system. The communication system includes the first apparatus in the foregoing embodiments, the first network device in the foregoing embodiments, and the core network device in the foregoing embodiments.

An embodiment of this application further provides a chip apparatus, including a processor, configured to invoke a computer program, or computer instructions stored in a storage, so that the processor performs the method provided in any one of embodiments shown in FIG. 3 to FIG. 5B, Embodiment A, Embodiment B, and Embodiment C.

In a possible implementation, an input of the chip apparatus corresponds to a receiving operation in any one of embodiments shown in FIG. 3 to FIG. 5B, Embodiment A, Embodiment B, and Embodiment C, and an output of the chip apparatus corresponds to a sending operation in any one of embodiments shown in FIG. 3 to FIG. 5B, Embodiment A, Embodiment B, and Embodiment C.

Optionally, the processor is coupled to the storage through an interface.

Optionally, the chip apparatus further includes the storage, and the storage stores the computer program or the computer instructions.

The processor mentioned in any one of the foregoing may be a general-purpose central processing unit, a microprocessor, an application-specific integrated circuit (application-specific integrated circuit, ASIC), or one or more integrated circuits configured to control program execution of the method provided in any one of embodiments shown in FIG. 3 to FIG. 5B, Embodiment A, Embodiment B, and Embodiment C. The storage mentioned in any one of the foregoing may be a read-only memory (read-only memory, ROM), another type of static storage device that can store static information and instructions, a random access memory (random access memory, RAM), or the like.

It may be clearly understood by persons skilled in the art that for convenience and brevity of description, for explanation and beneficial effect of related content in any apparatus provided above, refer to the foregoing corresponding method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A positioning measurement method, wherein the method comprises:
sending, by a core network device, an inventory request to a first network device, wherein the inventory request is used to request inventory of a first apparatus, the inventory request comprises first information, and the first information indicates the first network device to perform positioning measurement on the first apparatus; and
receiving, by the first network device, the inventory request from the core network device, and performing, by the first network device, positioning measurement on the first apparatus during or after an inventory process of the first apparatus.

2. The method according to claim 1, wherein the method further comprises:
sending, by the core network device to the first network device, at least one of the following: second information, third information, recommended configuration information, or fourth information, wherein
the second information indicates a positioning manner of performing positioning measurement on the first apparatus, and the positioning manner comprises performing positioning measurement on the first apparatus based on a positioning reference signal sent by the first apparatus, or performing positioning measurement on the first apparatus based on an electronic product code EPC sent by the first apparatus; the third information indicates to perform positioning measurement on the first apparatus during the inventory process, or perform positioning measurement on the first apparatus after the inventory process; the recommended configuration information comprises positioning reference signal configuration information recommended by the core network device; and the fourth information indicates a measurement quantity type of positioning measurement performed on the first apparatus; and
receiving, by the first network device from the core network device, the at least one of the following: the second information, the third information, the recommended configuration information, or the fourth information.

3. The method according to claim 1 or 2, wherein after receiving, by the first network device, the inventory request from the core network device, the method further comprises:
sending, by the first network device, an inventory command to the first apparatus, wherein the inventory command is used for inventory of the first apparatus;
receiving, by the first network device, a first random number from the first apparatus; and
sending, by the first network device, first acknowledgment ACK to the first apparatus, wherein the firstACK indicates that the first network device successfully receives the first random number; and the first ACK comprises at least one of the following: a quantity of times of sending the positioning reference signal of the first apparatus or frequency domain information of the positioning reference signal; or the first ACK comprises at least one of the following: a quantity of times of sending the electronic product code EPC of the first apparatus or frequency domain information of the EPC.

4. The method according to claim 3, wherein the first ACK further comprises fifth information, and the fifth information indicates the first apparatus to send the positioning reference signal after the EPC is sent; or
the first ACK further comprises sixth information, and the sixth information indicates that the EPC sent by the first apparatus is used to perform positioning measurement on the first apparatus.

5. The method according to claim 3 or 4, wherein performing, by the first network device, positioning measurement on the first apparatus during or after the inventory process of the first apparatus comprises:
receiving, by the first network device, the positioning reference signal from the first apparatus; and
measuring, by the first network device, the positioning reference signal, to obtain a first measurement result.

6. The method according to claim 3 or 4, wherein performing, by the first network device, positioning measurement on the first apparatus during or after the inventory process of the first apparatus comprises:
receiving, by the first network device, the EPC from the first apparatus; and
measuring, by the first network device, the EPC, to obtain a second measurement result.

7. The method according to claim 3 or 4, wherein the frequency domain information of the positioning reference signal or the EPC of the first apparatus comprises a first frequency domain offset, and the first frequency domain offset is an offset of a frequency domain position, occupied by the positioning reference signal or the EPC of the first apparatus, relative to a carrier center frequency; and the method further comprises:
sending, by the first network device, the inventory command to the second apparatus, wherein the inventory command is further used for inventory of the second apparatus;
receiving, by the first network device, a second random number from the second apparatus; and
sending, by the first network device, second ACK to the second apparatus, wherein the second ACK indicates that the first network device successfully receives the second random number, the second ACK comprises frequency domain information of a positioning reference signal or an EPC of the second apparatus, the frequency domain information comprises a second frequency domain offset, the second frequency domain offset is an offset of a frequency domain position, occupied by the positioning reference signal or the EPC of the second apparatus, relative to the carrier center frequency, and the first frequency domain offset is different from the second frequency domain offset.

8. The method according to claim 7, wherein the method further comprises:
sending, by the core network device, a first excitation request to the first network device, wherein the first excitation request comprises seventh information, and the seventh information indicates the first network device to excite the first apparatus and the second apparatus to send a positioning reference signal; and
receiving, by the first network device, the first excitation request from the core network device; and
performing, by the first network device, positioning measurement on the first apparatus during or after the inventory process of the first apparatus comprises:
sending, by the first network device, an excitation signal, wherein the excitation signal is used to excite the first apparatus and the second apparatus to send a positioning reference signal or an EPC;
receiving, by the first network device, the positioning reference signal or the EPC from the first apparatus;
measuring, by the first network device, the positioning reference signal or the EPC from the first apparatus, to obtain a third measurement result;
receiving, by the first network device, the positioning reference signal or the EPC from the second apparatus; and
measuring, by the first network device, the positioning reference signal or the EPC from the second apparatus, to obtain a fourth measurement result.

9. The method according to claim 8, wherein the first excitation request further comprises EPCs of a plurality of apparatuses in a first group, the first group comprises the first apparatus and the second apparatus, and the sixth information indicates the first network device to excite the plurality of apparatuses in the first group to send a positioning reference signal or an EPC.

10. The method according to any one of claims 1 to 4, wherein the method further comprises:
sending, by the core network device, a second excitation request to the first network device, wherein the second excitation request comprises eighth information, electronic product codes EPCs of a plurality of apparatuses in a first group, and ninth information, the first group comprises the first apparatus, the ninth information indicates excitation time sequences corresponding to the plurality of apparatuses in the first group, and the eighth information indicates the first network device to excite, based on the excitation time sequences corresponding to the plurality of apparatuses, the plurality of apparatuses in the first group to send a positioning reference signal or an EPC; and
receiving, by the first network device, the second excitation request from the core network device; and
performing, by the first network device, positioning measurement on the first apparatus during or after the inventory process of the first apparatus comprises:
separately exciting, by the first network device based on the excitation time sequences corresponding to the plurality of apparatuses, the plurality of apparatuses in the first group to send a positioning reference signal or an EPC;
receiving, by the first network device, the positioning reference signals or the EPCs sent by the plurality of apparatuses in the first group; and
separately measuring, by the first network device, the positioning reference signals or the EPCs from the plurality of apparatuses, to obtain corresponding measurement results.

11. The method according to any one of claims 1 to 10, wherein the method further comprises:
sending, by the first network device, first configuration information to the first apparatus, wherein the first configuration information comprises configuration information of the positioning reference signal of the first apparatus.

12. An inventory method, wherein the method comprises:
receiving, by a first apparatus, an inventory command from a first network device, wherein the inventory command is used for inventory of the first apparatus;
sending, by the first apparatus, a first random number to the first network device; and
receiving, by the first apparatus, first acknowledgment ACK from the first network device, wherein the firstACK indicates that the first network device successfully receives the first random number, and the first ACK comprises at least one of the following: a quantity of times of sending a positioning reference signal of the first apparatus or frequency domain information of the positioning reference signal, or the first ACK comprises at least one of the following: a quantity of times of sending an electronic product code EPC of the first apparatus or frequency domain information of the EPC.

13. The method according to claim 12, wherein the first ACK further comprises fifth information, and the fifth information indicates the first apparatus to send the positioning reference signal after the EPC is sent; or
the first ACK further comprises sixth information, and the sixth information indicates that the EPC sent by the first apparatus is used to perform positioning measurement on the first apparatus.

14. The method according to claim 12 or 13, wherein the frequency domain information of the positioning reference signal or the EPC of the first apparatus comprises a first frequency domain offset, and the first frequency domain offset is an offset of a frequency domain position, occupied by the positioning reference signal or the EPC of the first apparatus, relative to a carrier center frequency.

15. The method according to any one of claims 12 to 14, wherein after receiving, by the first apparatus, the first acknowledgment ACK from the first network device, the method further comprises:
sending, by the first apparatus, the positioning reference signal or the EPC to the first network device based on the first ACK.

16. The method according to any one of claims 12 to 14, wherein the method further comprises:
receiving, by the first apparatus, first configuration information from the first network device, wherein the first configuration information comprises configuration information of the positioning reference signal of the first apparatus.

17. The method according to claim 16, wherein the method further comprises:
sending, by the first apparatus, the positioning reference signal or the EPC to the first network device based on the first configuration information and the first ACK.

18. A first apparatus, wherein the first apparatus comprises a receiving module and a sending module, the receiving module is configured to perform the receiving operation according to any one of claims 12 to 17, and the sending module is configured to perform the sending operation according to any one of claims 12 to 17.

19. A communication apparatus, wherein the communication apparatus comprises a receiving module and a processing module;
the receiving module is configured to receive an inventory request from a core network device, wherein the inventory request is used to request inventory of a first apparatus, the inventory request comprises first information, and the first information indicates the communication apparatus to perform positioning measurement on the first apparatus; and
the processing module is configured to perform positioning measurement on the first apparatus during or after an inventory process of the first apparatus.

20. A communication apparatus, wherein the communication apparatus comprises a processing module and a sending module;
the processing module is configured to determine an inventory request, wherein the inventory request is used to request inventory of a first apparatus, the inventory request comprises first information, and the first information indicates a first network device to perform positioning measurement on the first apparatus; and
the sending module is configured to send the inventory request to the first network device.

21. A first apparatus, wherein the first apparatus comprises a processor, and the processor is configured to perform the method according to any one of claims 12 to 17; or
the first apparatus comprises a storage and the processor, the storage is configured to store computer instructions, and the processor is configured to execute a computer program or the computer instructions stored in the storage, so that the first apparatus performs the method according to any one of claims 12 to 17.

22. A communication apparatus, wherein the communication apparatus comprises a processor, and the processor is configured to perform the method performed by the core network device or the first network device according to any one of claims 1 to 11; or
the communication apparatus comprises a storage and the processor, the storage is configured to store computer instructions, and the processor is configured to execute a computer program or the computer instructions stored in the storage, so that the communication apparatus performs the method performed by the core network device or the first network device according to any one of claims 1 to 11.

23. A computer-readable storage medium, wherein the computer-readable storage medium stores a computer program, and when the computer program is executed by a communication apparatus, the communication apparatus is enabled to perform the method according to any one of claims 1 to 17.

24. A communication system, wherein the communication system comprises a core network device, a first network device, and a first apparatus, the core network device is configured to perform an operation performed by the core network device according to any one of claims 1 to 11, the first network device is configured to perform an operation performed by the first network device according to any one of claims 1 to 11, and the first apparatus is configured to perform an operation performed by the first apparatus according to any one of claims 12 to 17.
